(19) Europäisches Patentamt
European Patent Office
Office européen des brevets

(11) **EP 4 318 504 A1**

(12) **EUROPEAN PATENT APPLICATION**
published in accordance with Art. 153(4) EPC

(43) Date of publication:
**07.02.2024 Bulletin 2024/06**

(21) Application number: **22773894.5**

(22) Date of filing: **17.01.2022**

(51) International Patent Classification (IPC):
**H01F 1/057** $^{(2006.01)}$    **H01F 41/02** $^{(2006.01)}$

(52) Cooperative Patent Classification (CPC):
**Y02E 10/72**

(86) International application number:
**PCT/CN2022/072254**

(87) International publication number:
**WO 2022/199232 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2021  CN 202110327100**

(71) Applicant: **Fujian Changting Golden Dragon Rare-Earth Co., Ltd.**
**Fujian 366300 (CN)**

(72) Inventors:
• **QUAN, Qichen**
  **Longyan, Fujian 366300 (CN)**
• **CHEN, Dakun**
  **Longyan, Fujian 366300 (CN)**
• **HUANG, Qingfang**
  **Longyan, Fujian 366300 (CN)**
• **FU, Gang**
  **Longyan, Fujian 366300 (CN)**
• **HUANG, Jiaying**
  **Xiamen, Fujian 361000 (CN)**
• **XU, Deqin**
  **Longyan, Fujian 366300 (CN)**

(74) Representative: **karo IP**
**karo IP Patentanwälte**
**Kahlhöfer Rößler Kreuels PartG mbB**
**Postfach 32 01 02**
**40416 Düsseldorf (DE)**

(54) **R-T-B PERMANENT MAGNETIC MATERIAL, PREPARATION METHOD THEREFOR AND USE THEREOF**

(57)    Disclosed are an R-T-B permanent magnetic material, a preparation method therefor and the use thereof. The R-T-B-based permanent magnetic material comprises the following components by mass content: 26.5 to 32.0 mass percentage of R, R being a rare earth element containing at least Nd; 0.58 to 0.65 mass percentage of Cu; 0.21 to 0.33 mass percentage of Ga; B ≥0.99 mass percentage; 64.0 to 69.5 mass percentage of Fe; and 0.15 to 1.2 mass percentage of N, N being one or more of Zr, Ti, Nb, and Hf. The percentage is the mass percentage of the mass of each component in the total mass of the R-T-B permanent magnetic material. In the present invention, the R-T-B-based permanent magnetic material has uniformly distributed heavy rare earth elements, excellent magnet performance and a uniform performance.

EP 4 318 504 A1

## Description

### Field of the Invention

The present disclosure relates to an R-T-B-based permanent magnet material, and a preparation method and application thereof.

### Background of the Invention

R-T-B-based permanent magnet materials (R refers to a rare earth element, T refers to a transition metal element and a Group 3 metal element, and B refers to element boron) have been widely applied in the fields of electronic products, automobiles, wind power, home appliances, elevators, industrial robots, and the like because of their excellent magnetic properties. For example, an R-T-B-based permanent magnet material is used in a hard disk, a mobile phone, an earphone, or a permanent magnet motor such as an elevator traction machine or an electric generator, as a power source. The demand for R-T-B-based permanent magnet materials is gradually increasing, and requirements of various manufacturers for the magnetic properties such as remanence and coercivity are also gradually increasing.

Ren Shaoqing, et al. have reported the effect of CuGa grain boundary addition on magnetic properties and thermal stability of a sintered neodymium-iron-boron-based permanent magnet. Studies have found that after Ga is added to neodymium-iron-boron-based magnetic powder containing Cu, a Cu-Ga phase can be formed. However, the addition of Ga will also significantly increase the number of black holes in the magnet matrix, resulting in a low density and further reducing remanence and magnetic energy product. It can be seen that different elements and different element contents in neodymium-iron-boron-based magnets have a great influence on the microstructure. However, the coercivity of the neodymium-iron-boron-based magnet material formed in the document remains at a low level.

The Chinese Patent CN111724955A discloses an R-T-B-based permanent magnet, which includes the following components by mass content: a total content of Nd, Pr, Dy 30.00-32.20 mas%, and Tb, a content of Co of 0.3-1.3 mas%, a content of Zr of 0.21-0.85 mas%, and a content of B of 0.90-1.02 mas%. The heavy rare earth elements in the magnet material have a concentration gradient that decreases from the surface of the magnet to the inside. A preparation process is heavy rare earth coating or diffusion. Although the corrosion resistance of the material is improved, the consistency of its magnetic properties is poor. Furthermore, due to the existence of a certain concentration gradient in the distribution of the heavy rare earth elements in the magnet, the process is generally used to prepare thinner products.

Therefore, a technical problem to be urgently solved in the art is to provide an R-T-B-based permanent magnet material with a uniform distribution of heavy rare earth elements, high coercivity, and high remanence.

### Summary of the Invention

The present disclosure provides an R-T-B-based permanent magnet material, and a preparation method and application thereof in order to overcome the defect that in a case that the content of B in the R-T-B-based permanent magnet material in the prior art is greater than 0.99 mas%, it is easy to produce a boron-rich phase, which leads to deterioration of the magnetic properties. After a large number of studies and experiments, the inventors of the present disclosure have found that by adding one or more of Zr, Ti, Nb, and Hf, and combining Ga and Cu within certain content ranges with other elements, an R-T-B-based permanent magnet with a uniform distribution of heavy rare earth elements and excellent and uniform magnetic properties can be prepared.

In order to achieve the foregoing objective, the present disclosure provides the following technical solutions:
A first technical solution provided by the present disclosure is an R-T-B-based permanent magnet material, which includes the following components by mass content:

26.5-32.0 mas% of R that is a rare earth element containing at least Nd;

0.58-0.65 mas% of Cu;

0.21-0.33 mas% of Ga;

≥0.99 mas% of B;

64.0-69.5 mas% of Fe; and

0.15-1.2 mas% of N that is one or more of Zr, Ti, Nb, and Hf; and

the percentage is the mass percentage of the mass of each component in the total mass of the R-T-B-based permanent magnet material.

In the present disclosure, the R-T-B-based permanent magnet material may include a Re-rich phase, a boride, and a main phase grain.

The Re-rich phase may be a Nd-rich phase. The boride may be one or more of ZrB, HfB, NbB, and TiB. The main phase grain is generally a $Nd_2Fe_{14}B$ grain.

Cu and Ga may be distributed in the Re-rich phase. The abundance of Cu in the Re-rich phase may be more than 95% of Cu. The abundance of Ga in the Re-rich phase may be more than 95% of Ga. Ga may be distributed in the main phase grain. The abundance of Ga in the main phase grain may be less than 5% of Ga.

N is preferably distributed at a grain boundary between the Re-rich phase and the boride, and N distributed at the grain boundary may bind with B to form the boride. The abundance of N at the grain boundary is preferably more than 95% of N. N may replace Fe in the main phase grain and is distributed in the main phase grain. The abundance of N replacing Fe in the main phase grain is preferably less than 5% of N.

In the present disclosure, the content of R is preferably 29.0-31.0 mas%, and more preferably 29.2-29.95 mas%, such as 29.23 mas%, 29.36 mas%, 29.37 mas%, 29.51 mas%, 29.66 mas%, 29.85 mas%, 29.86 mas% or 29.89 mas%; and the percentage is the mass percentage of the mass of R in the total mass of the R-T-B-based permanent magnet material.

The content of Nd is preferably 29.23-29.89 mas%, and more preferably 29.36-29.86 mas%, such as 29.23 mas%, 29.36 mas%, 29.37 mas%, 29.51 mas%, 29.66 mas%, 29.85 mas%, 29.86 mas% or 29.89 mas%; and the percentage is the mass percentage of the mass of Nd in the R-T-B-based permanent magnet material.

R may further contain Pr. In a case that R contains Pr, the content of Pr may be conventional in the art, for example, the content of Pr is 0-0.3 mas% and is not 0 mas%; and the percentage is the mass percentage of the mass of Pr in the total mass of the R-T-B-based permanent magnet material.

In the present disclosure, the content of Cu is preferably 0.62-0.65 mas%, such as 0.63 mas%, 0.64 mas% or 0.65 mas%; and the percentage is the mass percentage of the mass of Cu in the total mass of the R-T-B-based permanent magnet material.

In the present disclosure, the content of Ga is preferably 0.28-0.32 mas%, such as 0.29 mas%, 0.30 mas%, 0.31 mas% or 0.32 mas%; and the percentage is the mass percentage of the mass of Ga in the total mass of the R-T-B-based permanent magnet material.

In the present disclosure, the content of B is preferably 0.99-1.15 mas%, and more preferably 1.00-1.05 mas%, such as 1.00 mas% or 1.01 mas%; and the percentage is the mass percentage of the mass of B in the total mass of the R-T-B-based permanent magnet material.

In the present disclosure, a ratio of the atom percentage of R to the atom percentage of B may be less than 2.50, such as 0.45.

In the present disclosure, a ratio of the atom percentage of Fe to the atom percentage of B may be less than 14, such as 0.08.

In the present disclosure, the content of Fe is preferably 64.3-69.3 mas%, such as 64.38 mas%, 65.03 mas%, 65.06 mas%, 65.12 mas%, 65.8 mas%, 65.81 mas%, 66.23 mas%, 66.3 mas%, 66.31 mas%, 66.41 mas%, 66.62 mas%, 66.63 mas%, 66.67 mas%, 66.71 mas%, 66.73 mas%, 66.77 mas%, 66.81 mas%, 67.43 mas%, 67.76 mas%, 67.94 mas%, 68.18 mas% or 68.27 mas%; and the percentage is the mass percentage of the mass of Fe in the total mass of the R-T-B-based permanent magnet material.

In the present disclosure, the content of N may be 0.4-0.78 mas%, and is preferably 0.44-0.64 mas%, such as 0.40 mas%, 0.41 mas%, 0.42 mas%, 0.44 mas%, 0.47 mas%, 0.50 mas%, 0.52 mas%, 0.55 mas%, 0.56 mas%, 0.60 mas%, 0.62 mas%, 0.64 mas%, 0.77 mas% or 0.78 mas%; and the percentage is the mass percentage of the mass of N in the total mass of the R-T-B-based permanent magnet material.

In a case that N contains Zr, the content of Zr may be 0.22-0.44 mas%, and preferably 0.32-0.34 mas%, such as 0.23 mas%, 0.25 mas%, 0.30 mas%, 0.31 mas% or 0.33 mas%; and the percentage is the mass percentage of the mass of Zr in the total mass of the R-T-B-based permanent magnet material.

In a case that N contains Ti, the content of Ti may be 0-0.41 mas% and is not 0 mas%, and preferably 0.18-0.3 mas%, such as 0.10 mas%, 0.15 mas%, 0.17 mas%, 0.20 mas%, 0.23 mas%, 0.24 mas%, 0.27 mas%, 0.34 mas%, 0.37 mas% or 0.40 mas%; and the percentage is the mass percentage of the mass of Ti in the total mass of the R-T-B-based permanent magnet material.

In a case that N contains Nb, the content of Nb may be 0-1.0 mas% and is not 0 mas%, and preferably 0.1-0.78 mas%, such as 0.13 mas%, 0.22 mas%, 0.27 mas%, 0.40 mas%, 0.47 mas% or 0.78 mas%; and the percentage is the mass percentage of the mass of Nb in the total mass of the R-T-B-based permanent magnet material.

In a case that N contains Hf, the content of Hf may be 0-0.8 mas% and is not 0 mas%, and preferably 0.47 mas%; and the percentage is the mass percentage of the mass of Hf in the total mass of the R-T-B-based permanent magnet material.

In the present disclosure, N is preferably Nb.

The content of Nb is preferably 0.4-0.8 mas%, and more preferably 0.78 mas%; and the percentage is the mass percentage of the mass of Nb in the total mass of the R-T-B-based permanent magnet material.

Or, N is preferably Zr and Ti.

The content of Zr is preferably 0.25-0.44 mas%, and more preferably 0.25 mas%, 0.31 mas%, 0.32 mas% or 0.33 mas%; and the percentage is the mass percentage of the mass of Zr in the total mass of the R-T-B-based permanent magnet material. The content of Ti is preferably 0.1-0.27 mas%, and more preferably 0.10 mas%, 0.15 mas%, 0.17 mas%, 0.23 mas%, 0.24 mas% or 0.27 mas%; and the percentage is the mass percentage of the mass of Ti in the total mass of the R-T-B-based permanent magnet material. Further preferably, N is 0.33 mas% of Zr and 0.23 mas% of Ti; or 0.31 mas% of Zr and 0.24 mas% of Ti; or 0.34 mas% of Zr and 0.1 mas% of Ti; or 0.32 mas% of Zr and 0.1 mas% of Ti; or 0.25 mas% of Zr and 0.27 mas% of Ti.

Or, N is preferably Nb and Ti.

The content of Nb is preferably 0.10-0.45 mas%, and more preferably 0.13 mas% or 0.40 mas%; and the percentage is the mass percentage of the mass of Nb in the total mass of the R-T-B-based permanent magnet material. The content of Ti is preferably 0-0.41 mas% and is not 0 mas%, and more preferably 0.20 mas%, 0.34 mas% or 0.37 mas%; and the percentage is the mass percentage of the mass of Ti in the total mass of the R-T-B-based permanent magnet material. Further preferably, N is 0.20 mas% of Ti and 0.40 mas% of Nb; or 0.34 mas% of Ti and 0.13 mas% of Nb; or 0.37 mas% of Ti and 0.13 mas% of Nb.

Or, N is preferably Zr, Nb, and Ti.

The sum of the contents of Zr, Nb, and Ti is preferably 0.405-0.78 mas%, and more preferably 0.62 mas% or 0.64 mas%; and the percentage is the mass percentage of the sum of the contents of Zr, Nb, and Ti in the total mass of the R-T-B-based permanent magnet material. The content of Zr is preferably 0.2-0.3 mas%, and more preferably 0.22 mas% or 0.23 mas%; and the percentage is the mass percentage of the mass of Zr in the total mass of the R-T-B-based permanent magnet material. The content of Nb is preferably 0.14-0.2 mas%, and more preferably 0.15 mas% or 0.17 mas%; and the percentage is the mass percentage of the mass of Nb in the total mass of the R-T-B-based permanent magnet material. The content of Ti is preferably 0.2-0.3 mas%, and more preferably 0.22 mas% or 0.27 mas%; and the percentage is the mass percentage of the mass of Ti in the total mass of the R-T-B-based permanent magnet material. Further preferably, N is 0.23 mas% of Zr, 0.17 mas% of Ti, and 0.22 mas% of Nb; or 0.22 mas% of Zr, 0.15 mas% of Ti, and 0.27 mas% of Nb.

In the present disclosure, those skilled in the art know that the R-T-B-based permanent magnet material further includes unavoidable impurities that are introduced in the preparation process, such as one or more of C, O, Al, and Mn.

In a case that the R-T-B-based permanent magnet material contains C, the content of C may be 0.089-0.15 mas%, such as 0.09 mas%; and the percentage is the mass percentage of the mass of C in the total mass of the R-T-B-based permanent magnet material.

In a case that the R-T-B-based permanent magnet material contains O, the content of O may be conventional in the art, and is generally less than 0.09 mas%, such as 0.07 mas% or 0.08 mas%; and the percentage is the mass percentage of the mass of O in the total mass of the R-T-B-based permanent magnet material.

In a case that the R-T-B-based permanent magnet material contains Al, the content of Al may be conventional in the art, for example, the content of Al is less than 0.07 mas%; and the percentage is the mass percentage of the mass of Al in the total mass of the R-T-B-based permanent magnet material.

In a case that the R-T-B-based permanent magnet material contains Mn, the content of Mn may be conventional in the art, for example, the content of Mn is less than 0.01 mas%; and the percentage is the mass percentage of the mass of Mn in the total mass of the R-T-B-based permanent magnet material.

In the present disclosure, those skilled in the art know that the R-T-B-based permanent magnet material may further include RH that is a heavy rare earth element in order to further improve the magnetic properties.

In a case that the R-T-B-based permanent magnet material includes RH, the R-T-B-based permanent magnet material preferably further includes a shell of the main phase grain.

The shell of the main phase grain preferably includes a $RH_2Fe_{14}B$ grain. RH is preferably distributed in the shell of the main phase grain. The abundance of RH in the shell of the main phase grain is preferably more than 95% of RH.

In the present disclosure, types of RH preferably include one or more of Dy, Tb, and Ho. The content of RH may be 0.98-2.4 mas%, preferably 1.05-2.10 mas%, and more preferably 1.05-1.6 mas%, such as 1.05 mas%, 1.2 mas%, 1.3 mas%, 1.5 mas%, 1.6 mas%, 1.65 mas%, 2.1 mas% or 2.25 mas%; and the percentage is the mass percentage of the mass of RH in the total mass of the R-T-B-based permanent magnet material.

In a case that RH contains Dy, the content of Dy is preferably 1.05-1.6 mas%, such as 1.2 mas%, 1.3 mas%, 1.60 mas% or 1.65 mas%; and the percentage is the mass percentage of the mass of Dy in the total mass of the R-T-B-based permanent magnet material.

In a case that RH contains Tb, the content of Tb is preferably 1.05-1.6 mas%, such as 1.3 mas%; and the percentage is the mass percentage of the mass of Tb in the total mass of the R-T-B-based permanent magnet material.

In the present disclosure, RH is preferably Tb. The content of Tb is preferably 0.98-1.60 mas%, and more preferably 1.05-1.60 mas%, such as 1.30 mas% or 1.50 mas%; and the percentage is the mass percentage of the mass of Tb in the total mass of the R-T-B-based permanent magnet material.

Or, RH is preferably Dy. The content of Dy is preferably 1.00-1.80 mas%, and more preferably 1.05-1.60 mas%, such as 1.20 mas% or 1.30 mas%; and the percentage is the mass percentage of the mass of Dy in the total mass of the R-T-B-based permanent magnet material.

Or, RH is preferably Tb and Dy. The content of Tb is preferably 1.00-1.65 mas%, and more preferably 1.20 mas% or 1.60 mas%; and the percentage is the mass percentage of the mass of Tb in the total mass of the R-T-B-based permanent magnet material. The content of Dy is preferably 1.00-1.60 mas%, and more preferably 1.05 mas%; and the percentage is the mass percentage of the mass of Dy in the total mass of the R-T-B-based permanent magnet material. Further preferably, RH is 1.20 mas% of Tb and 1.05 mas% of Dy.

In the present disclosure, the R-T-B-based permanent magnet material may further include Co.

In a case that the R-T-B-based permanent magnet material includes Co, Co may replace Fe in the main phase grain and is distributed in the main phase grain. The abundance of Co replacing Fe in the main phase grain is preferably more than 95% of Co. Co may be further distributed at the grain boundary between the Re-rich phase and the boride. The abundance of Co at the grain boundary is preferably less than 5% of Co.

In the present disclosure, the content of Co may be 0.8-2.2 mas%, and preferably 1.5-2.0 mas%, such as 1.55 mas%; and the percentage is the mass percentage of the mass of Co in the total mass of the R-T-B-based permanent magnet material.

In a case that the R-T-B-based permanent magnet material includes Co, a ratio of the sum of the atom percentages of Co and Fe to the atom percentage of B may be less than 14, such as 12.65 or 13.13.

In the present disclosure, the R-T-B-based permanent magnet material may include the following components by mass content:

29.0-31.0 mas% of R that is a rare earth element containing at least Nd;

0.62-0.65 mas% of Cu;

0.28-0.32 mas% of Ga;

0.99-1.15 mas% of B;

64.3-69.3 mas% of Fe; and

0.4-0.78 mas% of N that is one or more of Zr, Ti, Nb, and Hf; and

the percentage is the mass percentage of the mass of each component in the total mass of the R-T-B-based permanent magnet material.

In the present disclosure, the R-T-B-based permanent magnet material preferably includes the following components by mass content:

26.5-32.0 mas% of R that is a rare earth element containing at least Nd;

0.58-0.65 mas% of Cu;

0.21-0.33 mas% of Ga;

0.99-1.15 mas% of B;

64.0-69.5 mas% of Fe;

0.15-1.2 mas% of N that is one or more of Zr, Ti, Nb, and Hf; and

0.98-2.4 mas% of RH that is one or more of Dy, Tb, and Ho; and

the percentage is the mass percentage of the mass of each component in the total mass of the R-T-B-based permanent magnet material.

In the present disclosure, the R-T-B-based permanent magnet material more preferably includes the following components by mass content:

29.0-31.0 mas% of R that is a rare earth element containing at least Nd;

0.62-0.65 mas% of Cu;

0.28-0.32 mas% of Ga;

0.99-1.15 mas% of B;

64.3-69.3 mas% of Fe;

0.4-0.78 mas% of N that is one or more of Zr, Ti, Nb, and Hf;

0.98-2.4 mas% of RH that is one or more of Dy, Tb, and Ho; and

0.8-2.2 mas% of Co; and

the percentage is the mass percentage of the mass of each component in the total mass of the R-T-B-based permanent magnet material.

A second technical solution provided by the present disclosure is a preparation method of the foregoing R-T-B-based permanent magnet material, which includes the following steps: preparing the R-T-B-based permanent magnet material from a main alloy and an auxiliary alloy by a dual alloy method.

Types of elements in the main alloy and the auxiliary alloy each include R, Fe, B, Cu, Ga, and N.

In the present disclosure, a mass ratio of the main alloy to the auxiliary alloy is preferably (4-49): 1, and more preferably (9-33): 1, such as 9: 1, 11.5: 1, 14.38: 1, 15.67: 1, 19: 1, 24: 1 or 32.33: 1.

According to common knowledge in the art, the sum of the contents of each element in the main alloy and the auxiliary alloy that is prepared according to the mass ratio is generally the content of each component of the R-T-B-based permanent magnet material. For example, the sum of a product of the content of Nd in the main alloy and the percentage of the main alloy in the R-T-B-based permanent magnet material and a product of the content of Nd in the auxiliary alloy and the percentage of the auxiliary alloy in the R-T-B-based permanent magnet material is the content of Nd in the R-T-B-based permanent magnet material.

In the present disclosure, in the main alloy, R is a rare earth element containing at least Nd; the content of R is preferably 26.0-31.5 mas%, and more preferably 26.58 mas%, 29.5 mas%, 29.6 mas%, 29.7 mas%, 29.75 mas%, 29.85 mas%, 30.15 mas%, 30.16 mas%, 30.2 mas% or 30.46 mas%; the percentage is the mass percentage of the mass of R in the total mass of the main alloy; the content of Nd is preferably 26.5-31.0 mas%, and more preferably 26.58 mas%, 29.5 mas%, 29.6 mas%, 29.7 mas%, 29.75 mas%, 29.85 mas%, 30.15 mas%, 30.16 mas%, 30.2 mas% or 30.46 mas%; and the percentage is the mass percentage of the mass of Nd in the total mass of the main alloy.

In the main alloy, the content of Cu is preferably 0.3-0.5 mas%, and more preferably 0.345 mas%, 0.35 mas%, 0.36 mas%, 0.38 mas%, 0.4 mas%, 0.445 mas%, 0.45 mas% or 0.47 mas%; and the percentage is the mass percentage of the mass of Cu in the total mass of the main alloy.

In the main alloy, the content of Ga is preferably 0.15-0.38 mas%, and more preferably 0.16 mas%, 0.29 mas%, 0.3 mas%, 0.31 mas%, 0.33 mas% or 0.37 mas%; and the percentage is the mass percentage of the mass of Ga in the total mass of the main alloy.

In the main alloy, the content of B is preferably 0.9-1.05 mas%, and more preferably 1.00 mas%, 1.02 mas%, 1.03 mas% or 1.04 mas%; and the percentage is the mass percentage of the mass of B in the total mass of the main alloy.

In the main alloy, the content of Fe is preferably 65.0-72.0 mas%, and more preferably 65.47 mas%, 66.16 mas%, 66.17 mas%, 66.23 mas%, 66.55 mas%, 66.95 mas%, 67.32 mas%, 67.61 mas%, 67.62 mas%, 67.85 mas%, 67.88 mas%, 67.94 mas%, 68.12 mas%, 68.17 mas%, 68.28 mas%, 68.31 mas%, 68.76 mas%, 68.81 mas% or 71.14 mas%; and the percentage is the mass percentage of the mass of Fe in the total mass of the main alloy.

In the main alloy, the content of N is preferably 0.1-0.55 mas%, and more preferably 0.11 mas%, 0.16 mas%, 0.22 mas%, 0.255 mas%, 0.265 mas%, 0.28 mas%, 0.285 mas%, 0.29 mas%, 0.41 mas%, 0.415 mas%, 0.42 mas%, 0.44 mas%, 0.5 mas% or 0.52 mas%; and the percentage is the mass percentage of the mass of N in the total mass of the main alloy.

In a case that N contains Zr, the content of Zr may be 0.05-0.2 mas%, and preferably 0.16 mas%; and the percentage is the mass percentage of the mass of Zr in the total mass of the main alloy. In a case that N contains Ti, the content of Ti may be 0.10-0.3 mas%, and preferably 0.11 mas%, 0.145 mas%, 0.15 mas%, 0.16 mas%, 0.18 mas%, 0.21 mas%, 0.22 mas%, 0.25 mas%, 0.255 mas%, 0.265 mas% or 0.28 mas%; and the percentage is the mass percentage of the mass of Ti in the total mass of the main alloy. In a case that N contains Nb, the content of Nb may be 0.1-0.55 mas%, and preferably 0.14 mas%, 0.21 mas%, 0.235 mas%, 0.28 mas%, 0.5 mas% or 0.52 mas%; and the percentage is the mass percentage of the mass of Nb in the total mass of the main alloy.

In the main alloy, those skilled in the art know that the main alloy may further include RH that is a heavy rare earth element in order to further improve the magnetic properties.

Types of RH preferably include one or more of Dy, Tb, and Ho. The content of RH may be conventional in the art, and is preferably 0.5-0.8 mas%, and more preferably 0.64 mas%; and the percentage is the mass percentage of the mass of RH in the total mass of the main alloy. In a case that RH contains Dy, the content of Dy is preferably 0.05-0.35 mas%, such as 0.32 mas%; and the percentage is the mass percentage of the mass of Dy in the total mass of the main alloy. In a case that RH contains Tb, the content of Tb is preferably 0.05-0.35 mas%, such as 0.32 mas%; and the percentage is the mass percentage of the mass of Tb in the total mass of the main alloy.

RH is preferably Tb and Dy, and more preferably 0.32 mas% of Tb and 0.32 mas% of Dy.

The main alloy may further include Co. The content of Co may be 0.80-2.50 mas%, and preferably 0.843 mas%, 1.63 mas%, 1.726 mas% or 2.32 mas%; and the percentage is the mass percentage of the mass of Co in the total mass of the main alloy.

In the present disclosure, the main alloy may include the following components by mass content:

26.0-31.5 mas% of R that is a rare earth element containing at least Nd;

0.3-0.5 mas% of Cu;

0.15-0.38 mas% of Ga;

0.9-1.05 mas% of B;

65.0-72.0 mas% of Fe; and

0.1-0.55 mas% of N that is one or more of Zr, Ti, Nb, and Hf; and

the percentage is the mass percentage of the mass of each component in the total mass of the main alloy.

In the present disclosure, the main alloy preferably includes the following components by mass content:

26.0-31.5 mas% of R that is a rare earth element containing at least Nd;

0.3-0.5 mas% of Cu;

0.15-0.38 mas% of Ga;

0.9-1.05 mas% of B;

65.0-72.0 mas% of Fe;

0.1-0.55 mas% of N that is one or more of Zr, Ti, Nb, and Hf; and

0.5-0.8 mas% of RH that is one or more of Dy, Tb, and Ho; and

the percentage is the mass percentage of the mass of each component in the total mass of the main alloy.

In the present disclosure, the main alloy more preferably includes the following components by mass content:

26.0-31.5 mas% of R that is a rare earth element containing at least Nd;

0.3-0.5 mas% of Cu;

0.15-0.38 mas% of Ga;

0.9-1.05 mas% of B;

65.0-72.0 mas% of Fe;

0.1-0.55 mas% of N that is one or more of Zr, Ti, Nb, and Hf;

0.5-0.8 mas% of RH that is one or more of Dy, Tb, and Ho; and

0.80-2.50 mas% of Co; and

the percentage is the mass percentage of the mass of each component in the total mass of the main alloy.

In the present disclosure, in the auxiliary alloy, the content of Nd is preferably 10.0-30.0 mas%, and more preferably 25.0 mas%; and the percentage is the mass percentage of the mass of Nd in the total mass of the auxiliary alloy.
In the auxiliary alloy, the content of Cu is preferably 3.00-6.00 mas%, and more preferably 5.00 mas% or 5.5 mas%; and the percentage is the mass percentage of the mass of Cu in the total mass of the auxiliary alloy.
In the auxiliary alloy, the content of Ga is preferably 3.00-6.00 mas%, and more preferably 3.50 mas% or 5.00 mas%; and the percentage is the mass percentage of the mass of Ga in the total mass of the auxiliary alloy.
In the auxiliary alloy, the content of B is preferably 0.30-0.70 mas%, and more preferably 0.40 mas%, 0.50 mas% or 0.60 mas%; and the percentage is the mass percentage of the mass of B in the total mass of the auxiliary alloy.
In the auxiliary alloy, the content of Fe is preferably 34.0-68.5 mas%, and more preferably 34.4 mas%, 42 mas%, 43.7 mas%, 44 mas%, 44.5 mas%, 45 mas%, 45.5 mas%, 46.5 mas%, 47 mas%, 53.2 mas% or 68.2 mas%; and the percentage is the mass percentage of the mass of Fe in the total mass of the auxiliary alloy.
In the auxiliary alloy, the content of N is preferably 3.00-6.00 mas%, and more preferably 3.00 mas%, 3.3 mas%, 4 mas%, 4.5 mas%, 5.00 mas%, 5.50 mas% or 5.80 mas%; and the percentage is the mass percentage of the mass of N in the total mass of the auxiliary alloy.
In a case that N contains Zr, the content of Zr may be 3.00-5.60 mas%, and preferably 3.3 mas%, 4 mas%, 4.5 mas%, 5 mas% or 5.50 mas%; and the percentage is the mass percentage of the mass of Zr in the total mass of the auxiliary alloy. In a case that N contains Ti, the content of Ti may be 3.0-5.00 mas%, and preferably 4 mas% or 4.5 mas%; and the percentage is the mass percentage of the mass of Ti in the total mass of the auxiliary alloy. In a case that N contains Nb, the content of Nb may be 3.5-6.00 mas%, and preferably 4 mas% or 5.8 mas%; and the percentage is the mass percentage of the mass of Nb in the total mass of the auxiliary alloy.
In the auxiliary alloy, those skilled in the art know that the auxiliary alloy may further include RH that is a heavy rare earth element in order to further improve the magnetic properties.
Types of RH preferably include one or more of Dy, Tb, and Ho. The content of RH may be conventional in the art, and is preferably 30.00-40.00 mas%, and more preferably 37.5 mas%; and the percentage is the mass percentage of the mass of RH in the total mass of the auxiliary alloy.
In a case that RH contains Dy, the content of Dy is preferably 12.00-25.00 mas%, and more preferably 15 mas%, 17.5 mas% or 20.00 mas%; and the percentage is the mass percentage of the mass of Dy in the total mass of the auxiliary alloy. In a case that RH contains Tb, the content of Tb is preferably 10.00-25.0 mas%, and more preferably 20 mas%; and the percentage is the mass percentage of the mass of Tb in the total mass of the auxiliary alloy.
RH is preferably Tb and Dy, and more preferably 20 mas% of Tb and 17.5 mas% of Dy, or 15 mas% of Tb and 15 mas% of Dy.
In the present disclosure, the auxiliary alloy may include the following components by mass content:

10.0-30.0 mas% of R that is a rare earth element containing at least Nd;

3.00-6.00 mas% of Cu;

3.00-6.00 mas% of Ga;

0.30-0.70 mas% of B;

34.0-68.5 mas% of Fe; and

3.00-6.00 mas% of N that is one or more of Zr, Ti, Nb, and Hf; and

the percentage is the mass percentage of the mass of each component in the total mass of the auxiliary alloy.

In the present disclosure, the auxiliary alloy preferably includes the following components by mass content:

10.0-30.0 mas% of R that is a rare earth element containing at least Nd;

3.00-6.00 mas% of Cu;

3.00-6.00 mas% of Ga;

0.30-0.70 mas% of B;

34.0-68.5 mas% of Fe;

3.00-6.00 mas% of N that is one or more of Zr, Ti, Nb, and Hf; and

30.00-40.00 mas% of RH that is one or more of Dy, Tb, and Ho; and

the percentage is the mass percentage of the mass of each component in the total mass of the auxiliary alloy.

In the present disclosure, the dual alloy preparation process may generally include: sintering and ageing mixed alloy powder of the main alloy and the auxiliary alloy in sequence.

The mixed alloy powder may be generally prepared by mixing the main alloy with the auxiliary alloy. The mixing is preferably uniform mixing. The uniform mixing may include: mixing the main alloy with the auxiliary alloy, and then performing hydrogen decrepitation and jet milling, or performing hydrogen decrepitation and jet milling on the main alloy and the auxiliary alloy separately, and then uniformly mixing, and preferably includes: mixing the main alloy with the auxiliary alloy, and then performing hydrogen decrepitation and jet milling.

The hydrogen decrepitation may include: performing saturated hydrogen absorption under a hydrogen pressure of 0.067-0.098 MPa and dehydrogenization at 480-580°C, and preferably includes: performing saturated hydrogen absorption under a hydrogen pressure of 0.067-0.098 MPa and dehydrogenization at 550°C. A particle size of the powder subjected to jet milling may be 3.8-4.2 $\mu$m, and preferably 3.9 $\mu$m.

The sintering temperature may be above 1000°C, and is preferably 1050-1200°C, and more preferably 1070°C. The sintering time may be 4-7 h, and is preferably 6 h. More preferably, the sintering may further include back-sintering. The back-sintering temperature may be 1050-1100°C, and is preferably 1080°C. The back-sintering time may be 3-5 h, and is preferably 4 h.

The ageing may include primary ageing and secondary ageing.

The primary ageing may be a conventional primary ageing process in the art, and preferably, the primary ageing is performed under argon atmosphere. The purity of argon under the argon atmosphere is higher than 99.9%. The primary ageing temperature may be conventional primary ageing temperature in the art, and is preferably 800-950°C, and more preferably 900°C. The primary ageing time may be 2-4 h, and is preferably 3 h.

The secondary ageing temperature may be conventional secondary ageing temperature in the art, and is preferably 430-490°C, and more preferably 490°C. The secondary ageing time may be 2-4 h, and is preferably 3 h.

A rate at which the temperature rises to the primary ageing temperature or the secondary ageing temperature is preferably 3-5°C/min. The starting temperature may be room temperature. The room temperature generally refers to 25±5°C.

In the present disclosure, a preparation method of the main alloy may include: preparing the elements in the main alloy into a main alloy solution, allowing the main alloy solution to pass through a rotating copper roller, refining and casting in sequence, and cooling to prepare a main alloy cast piece.

A rotation speed of the copper roller is preferably 40±0.2 rpm. The refining temperature is preferably 1520±20°C. The casting temperature is preferably 1420±10°C. The cooling may be cooling to below 50°C.

In the present disclosure, a preparation method of the auxiliary alloy may include: preparing the elements in the auxiliary alloy into an auxiliary alloy solution, allowing the auxiliary alloy solution to pass through a rotating copper roller, refining and casting in sequence, and cooling to prepare an auxiliary alloy cast piece.

A rotation speed of the copper roller is preferably 40±0.2 rpm. The refining temperature is preferably 1400-1570°C. The casting temperature is preferably 1420-1470°C. The cooling may be cooling to below 50°C.

A third technical solution provided by the present disclosure is an R-T-B-based permanent magnet material, which is prepared by the foregoing preparation method.

A fourth technical solution provided by the present disclosure is application of the foregoing R-T-B-based permanent magnet material as an electronic component.

The R-T-B-based permanent magnet material may be applied in the fields of automobile drivers, wind power, servo motors, and home appliances (such as air conditioners).

On the basis of common knowledge in the art, the foregoing preferred conditions can be combined arbitrarily to obtain preferred embodiments of the present disclosure.

All the reagents and raw materials used in the present disclosure are commercially available.

The positive progressive effects of the present disclosure are as follows:

(1) The R-T-B-based permanent magnet material of the present disclosure has excellent magnetic properties: $Br \geq 13.65$ kGs, $Hcb \geq 13.15$ kOe, $Hcj > 14.42$ kOe, $(BH)max \geq 44.8$ MGOe, $Hk \geq 14.28$ kOe, $Hk/Hcj \geq 0.98$, and $HD5 \geq 13.22$ kOe, the temperature stability of the magnet is good, with an absolute value of the temperature coefficient $\alpha\%/°C$ of Br at 20-80°C of less than 0.13 and an absolute value of the temperature coefficient $\alpha\%/°C$ of Br at 20-140°C of less than 0.14.

(2) The relative permeability of the R-T-B-based permanent magnet material of the present disclosure is less than 1.03, the squareness ratio is greater than 98.2%, and the consistency of magnetic properties is high.

## Detailed Description of the Embodiments

The present disclosure will be further described below with reference to embodiments, but the present disclosure is not limited to the described embodiments. Experimental methods that do not indicate specific conditions in the following embodiments shall follow conventional methods and conditions, or product specifications.

Examples 1 to 25 and Comparative Examples 1 to 5

1. In Examples 1 to 25, main alloys and auxiliary alloys were prepared according to components of R-T-B-based permanent magnet materials and the contents shown in Table 1.

In Comparative Examples 1 to 5, main alloys and auxiliary alloys were prepared according to components of R-T-B-based permanent magnet materials and the contents shown in Table 2.

Table 1

| | Component | Nd | Cu | Ga | B | Zr | Ti | Nb | Hf | Tb | Dy | Co | Fe | Mass ratio of main alloy to auxiliary alloy |
|---|---|---|---|---|---|---|---|---|---|---|---|---|---|---|
| Example 1 | mas% of main alloy | 29.7 | 0.36 | 0.37 | 1.04 | / | 0.255 | / | / | / | / | / | 68.28 | 9 |
| | mas% of auxiliary alloy | 25 | 3 | / | 0.5 | 3.3 | / | / | / | / | / | / | 68.20 | 1 |
| Example 2 | mas% of main alloy | 30.16 | 0.35 | 0.33 | 1.04 | / | / | 0.5 | / | / | / | / | 67.62 | 15.67 |
| | mas% of auxiliary alloy | 25 | 5 | / | 0.5 | 5 | / | / | / | / | / | / | 64.50 | 1 |
| Example 3 | mas% of main alloy | 29.75 | 0.38 | 0.3 | 1.04 | / | 0.18 | 0.235 | / | / | / | / | 68.12 | 19 |
| | mas% of auxiliary alloy | 25 | 5.5 | / | 0.4 | 4.5 | / | / | / | / | / | / | 64.60 | 1 |
| Example 4 | mas% of main alloy | 29.85 | 0.445 | 0.29 | 1.04 | / | 0.16 | 0.28 | / | / | / | / | 67.94 | 24 |
| | mas% of auxiliary alloy | 25 | 5.5 | / | 0.4 | 5.5 | / | / | / | / | / | / | 63.60 | 1 |
| Example 5 | mas% of main alloy | 29.5 | 0.47 | 0.31 | 1 | 0.16 | 0.25 | / | / | / | / | / | 68.31 | 32.33 |
| | mas% of auxiliary alloy | 25 | 5.5 | / | 0.5 | 5 | / | / | / | / | / | / | 64.00 | 1 |
| Example 6 | mas% of main alloy | 29.7 | 0.36 | 0.37 | 1.04 | / | 0.255 | / | / | / | / | / | 68.28 | 9 |
| | mas% of auxiliary alloy | 25 | 3 | / | 0.5 | 3.3 | / | / | / | 15 | / | / | 53.20 | 1 |
| Example 7 | mas% of main alloy | 30.16 | 0.35 | 0.33 | 1.04 | / | / | 0.5 | / | / | / | / | 67.62 | 15.67 |
| | mas% of auxiliary alloy | 25 | 5 | / | 0.5 | 5 | / | / | / | / | 20 | / | 44.50 | 1 |
| Example 8 | mas% of main alloy | 30.46 | 0.35 | 0.33 | 1.04 | / | / | 0.5 | / | / | / | / | 67.32 | 15.67 |
| | mas% of auxiliary alloy | 10 | 5 | / | 0.5 | 5 | / | / | / | 20 | 17.5 | / | 42.00 | 1 |
| Example 9 | mas% of main alloy | 30.2 | 0.45 | / | 1.02 | 0.05 | 0.11 | / | / | / | / | / | 68.17 | 14.38 |
| | mas% of auxiliary alloy | 25 | 3 | 5 | 0.5 | 4.5 | / | / | / | 20 | / | / | 42.00 | 1 |
| Example 10 | mas% of main alloy | 29.6 | 0.45 | / | 1.03 | / | 0.11 | / | / | / | / | / | 68.81 | 11.5 |
| | mas% of auxiliary alloy | 25 | 3 | 3.5 | 0.5 | 4 | / | / | / | 20 | / | / | 44.00 | 1 |
| Example 11 | mas% of main alloy | 30.2 | 0.45 | / | 1.02 | 0.05 | 0.11 | / | / | / | / | / | 68.17 | 14.38 |
| | mas% of auxiliary alloy | 25 | 3 | 5 | 0.5 | 4.5 | / | / | / | / | 20 | / | 42.00 | 1 |
| Example 12 | mas% of main alloy | 29.6 | 0.45 | / | 1.03 | / | 0.11 | / | / | / | / | / | 68.81 | 11.5 |
| | mas% of auxiliary alloy | 25 | 3 | 3.5 | 0.5 | 4 | / | / | / | / | 20 | / | 44.00 | 1 |

| | Component | Nd | Cu | Ga | B | Zr | Ti | Nb | Hf | Tb | Dy | Co | Fe | Mass ratio of main alloy to auxiliary alloy |
|---|---|---|---|---|---|---|---|---|---|---|---|---|---|---|
| Example 13 | mas% of main alloy | 26.58 | 0.345 | / | 1.02 | / | 0.28 | / | / | 0.32 | 0.32 | / | 71.14 | 19 |
| | mas% of auxiliary alloy | 25 | 5 | / | 0.6 | 5 | / | / | / | 15 | 15 | / | 34.40 | 1 |
| Example 11 | mas% of main alloy | 30.15 | 0.35 | 0.29 | 1.02 | / | 0.265 | / | / | 0.05 | / | / | 67.88 | 19 |
| | mas% of auxiliary alloy | 25 | 5 | / | 0.5 | / | 3 | / | / | 20 | / | / | 46.50 | 1 |
| Example 15 | mas% of main alloy | 30.15 | 0.35 | 0.3 | 1.02 | / | / | 0.52 | / | 0.05 | / | / | 67.61 | 19 |
| | mas% of auxiliary alloy | 25 | 5 | / | 0.5 | / | / | 5.8 | / | 20 | / | / | 43.70 | 1 |
| Example 16 | mas% of main alloy | 30.15 | 0.35 | 0.16 | 1.02 | / | 0.21 | 0.21 | / | 0.05 | / | / | 67.85 | 19 |
| | mas% of auxiliary alloy | 25 | 5 | / | 0.5 | / | / | 4 | / | 20 | / | / | 45.50 | 1 |
| Example 17 | mas% of main alloy | 30.2 | 0.45 | / | 1.02 | 0.05 | 0.11 | / | / | / | / | / | 68.17 | 14.38 |
| | mas% of auxiliary alloy | 25 | 3 | 5 | 0.5 | 4.5 | / | / | / | 15 | / | / | 47.00 | 1 |
| Example 18 | mas% of main alloy | 29.6 | 0.45 | / | 1.03 | / | 0.11 | / | / | / | 0.05 | / | 68.76 | 11.5 |
| | mas% of auxiliary alloy | 25 | 3 | 3.5 | 0.5 | 4 | / | / | / | / | 20 | / | 44.00 | 1 |
| Example 19 | mas% of main alloy | 29.7 | 0.36 | 0.37 | 1.04 | / | 0.255 | / | / | / | / | 1.726 | 66.55 | 9 |
| | mas% of auxiliary alloy | 25 | 3 | / | 0.5 | 3.3 | / | / | / | / | / | / | 68.20 | 1 |
| Example 20 | mas% of main alloy | 30.15 | 0.4 | 0.3 | 1.02 | / | 0.145 | 0.14 | / | 0.05 | / | 1.63 | 66.17 | 19 |
| | mas% of auxiliary alloy | 25 | 5 | / | 0.5 | / | 4 | / | / | 20 | / | / | 45.50 | 1 |
| Example 21 | mas% of main alloy | 30.15 | 0.4 | 0.3 | 1.02 | / | 0.15 | 0.14 | / | 0.05 | / | 1.63 | 66.16 | 19 |
| | mas% of auxiliary alloy | 25 | 5 | / | 0.5 | / | 4.5 | / | / | 20 | / | / | 45.00 | 1 |
| Example 22 | mas% of main alloy | 30.15 | 0.4 | 0.3 | 1.02 | / | 0.22 | / | / | 0.05 | / | 1.63 | 66.23 | 19 |
| | mas% of auxiliary alloy | 25 | 5 | / | 0.5 | / | 4 | / | / | 20 | / | / | 45.50 | 1 |
| Example 23 | mas% of main alloy | 30.15 | 0.4 | 0.3 | 1.02 | / | 0.145 | 0.14 | / | 0.05 | / | 0.843 | 66.95 | 19 |
| | mas% of auxiliary alloy | 25 | 5 | / | 0.5 | / | 4 | / | / | 20 | / | / | 45.50 | 1 |
| Example 24 | mas% of main alloy | 30.15 | 0.4 | 0.3 | 1.02 | / | 0.15 | 0.14 | / | 0.05 | / | 2.32 | 65.47 | 19 |
| | mas% of auxiliary alloy | 25 | 5 | / | 0.5 | / | 4.5 | / | / | 20 | / | / | 45.00 | 1 |

(continued)

| | Component | Nd | Cu | Ga | B | Zr | Ti | Nb | Hf | Tb | Dy | Co | Fe | Mass ratio of main alloy to auxiliary alloy |
|---|---|---|---|---|---|---|---|---|---|---|---|---|---|---|
| Example 25 | mas% of main alloy | 30.16 | 0.35 | 0.33 | 1.04 | / | / | / | 0.5 | / | / | / | 67.62 | 15.67 |
| | mas% of auxiliary alloy | 25 | 5 | / | 0.5 | 5 | / | / | / | / | / | / | 64.50 | 1 |

Note: "/" indicates that the element is not contained in the R-T-B-based permanent magnet material.

Table 2

| Component | | Nd | Cu | Ga | B | Zr | Ti | Nb | Hf | Tb | Dy | Co | Fe | Mass ratio of main alloy to auxiliary alloy |
|---|---|---|---|---|---|---|---|---|---|---|---|---|---|---|
| Comparative Example 1 | mas% of main alloy | 29.7 | / | 0.37 | 1.04 | / | 0.255 | / | / | / | / | / | 68.64 | 9 |
| | mas% of auxiliary alloy | 25 | 3 | / | 0.5 | 3.3 | / | / | / | / | / | / | 68.20 | 1 |
| Comparative Example 2 | mas% of main alloy | 30.16 | 0.35 | 0.08 | 1.04 | / | / | 0.5 | / | / | / | / | 67.87 | 15.67 |
| | mas% of auxiliary alloy | 25 | 5 | / | 0.5 | 5 | / | / | / | / | / | / | 64.50 | 1 |
| Comparative Example 3 | mas% of main alloy | 29.75 | 0.45 | 0.215 | 1.03 | / | 0.18 | 0.235 | / | / | / | / | 68.14 | 19 |
| | mas% of auxiliary alloy | 25 | 5.5 | / | 0.4 | 4.5 | / | / | / | / | / | / | 64.60 | 1 |
| Comparative Example 4 | mas% of main alloy | 30.16 | 0.35 | 0.33 | 0.99 | / | / | 0.5 | / | / | / | / | 67.67 | 15.67 |
| | mas% of auxiliary alloy | 25 | 5 | / | 0.4 | 5 | / | / | / | / | / | / | 64.60 | 1 |
| Comparative Example 5 | mas% of main alloy | 30.16 | 0.35 | 0.33 | 1.04 | / | / | / | / | / | / | / | 68.12 | 15.67 |
| | mas% of auxiliary alloy | 25 | 5 | / | 0.5 | / | / | / | / | / | / | / | 69.50 | 1 |

Note: "/" indicates that the element is not contained in the R-T-B-based permanent magnet material.

2. A preparation process of the main alloy was as follows:

The elements of the main alloy shown in Table 1 or Table 2 were prepared into a main alloy solution, and the main alloy solution was allowed to pass through a rotating copper roller (at a rotation speed of $40\pm0.2$ rpm), refined and cast in sequence, and cooled to prepare a main alloy cast piece. The refining temperature was $1520\pm20°C$, the refining time was 8-30 min, the casting temperature was $1420\pm10°C$, the casting time was 1-3 min, and the cooling was cooling to below 50°C.

3. A preparation process of the auxiliary alloy was as follows:

The elements of the auxiliary alloy shown in Table 1 or Table 2 were prepared into an auxiliary alloy solution, and the auxiliary alloy solution was allowed to pass through a rotating copper roller (at a rotation speed of $40\pm0.2$ rpm), refined and cast in sequence, and cooled to prepare an auxiliary alloy cast piece. The refining temperature was 1400-1570°C, the refining time was 8-30 min, the casting temperature was 1420-1470°C, the casting time was 1-3 min, and the cooling was cooling to below 50°C.

4. A preparation process of the R-T-B-based permanent magnet material was as follows:

(1) The main alloy and the auxiliary alloy shown in Table 1 or Table 2 were mixed in a ratio, and hydrogen decrepitation, jet milling, and mixing were performed on the mixture in sequence to form mixed alloy powder.

The hydrogen decrepitation included the following steps: saturated hydrogen absorption was performed under a hydrogen pressure of 0.067 MPa, and dehydrogenization was performed at 550°C; the mixing included the following steps: mixing was performed in a three-dimensional mixer for 3 h, and a particle size of the mixed alloy powder subjected to jet milling was 3.8-4.2 $\mu m$.

(2) The mixed alloy powder was sintered at 1050-1200°C for 6 h, and sintered at 1080°C for 4 h.

(3) Primary ageing was performed at 900°C for 3 h, and secondary ageing was performed at 490°C for 3 h to prepare the R-T-B-based permanent magnet material.

In Examples 1 to 25 and Comparative Examples 1 to 5, the particle size of the powder subjected to jet milling is shown in Table 3.

Table 3

| No. | Particle size of powder ($\mu m$) |
|---|---|
| Example 1 | 3.85 |
| Example 2 | 3.83 |
| Example 3 | 3.86 |
| Example 4 | 3.90 |
| Example 5 | 3.86 |
| Example 6 | 3.82 |
| Example 7 | 3.85 |
| Example 8 | 3.87 |
| Example 9 | 3.93 |
| Example 10 | 3.95 |
| Example 11 | 3.98 |
| Example 12 | 4.00 |
| Example 13 | 4.05 |
| Example 14 | 3.96 |
| Example 15 | 3.97 |

(continued)

| No. | Particle size of powder (μm) |
|---|---|
| Example 16 | 3.98 |
| Example 17 | 3.99 |
| Example 18 | 3.87 |
| Example 19 | 3.94 |
| Example 20 | 3.92 |
| Example 21 | 3.95 |
| Example 22 | 3.98 |
| Example 23 | 3.96 |
| Example 24 | 3.98 |
| Example 25 | 3.99 |
| Comparative Example 1 | 3.85 |
| Comparative Example 2 | 3.83 |
| Comparative Example 3 | 3.86 |
| Comparative Example 4 | 3.83 |
| Comparative Example 5 | 3.83 |

Effect embodiment

1. Determination of components:

Components of the R-T-B-based permanent magnet materials prepared in Examples 1 to 25 and Comparative Examples 1 to 5 and their contents were measured by using a high-frequency inductively coupled plasma emission spectrometer (ICP-OES, instrument model: Icap6300). Test results show that the contents of the components of the R-T-B-based permanent magnet materials of Examples 1 to 25 and Comparative Examples 1 to 5 are close to the addition amounts of the raw materials, without significant differences. Specific test results are shown in Table 4.

Table 4

| | Nd | Cu | Ga | B | Zr | Ti | Nb | Hf | Tb | Dy | Co | C | O | Al | Fe |
|---|---|---|---|---|---|---|---|---|---|---|---|---|---|---|---|
| Example 1 | 29.23 | 0.62 | 0.33 | 0.99 | 0.33 | 0.23 | / | / | / | / | / | / | / | / | 68.27 |
| Example 2 | 29.85 | 0.63 | 0.31 | 1.01 | 0.30 | / | 0.47 | / | / | / | / | / | / | / | 67.43 |
| Example 3 | 29.51 | 0.64 | 0.29 | 1.01 | 0.23 | 0.17 | 0.22 | / | / | / | / | / | / | / | 67.94 |
| Example 4 | 29.66 | 0.65 | 0.28 | 1.01 | 0.22 | 0.15 | 0.27 | / | / | / | / | / | / | / | 67.76 |
| Example 5 | 29.36 | 0.62 | 0.30 | 0.98 | 0.31 | 0.24 | / | / | / | / | / | / | / | / | 68.18 |
| Example 6 | 29.23 | 0.62 | 0.33 | 0.99 | 0.33 | 0.23 | / | / | 1.50 | / | / | / | / | / | 66.77 |
| Example 7 | 29.85 | 0.63 | 0.31 | 1.01 | 0.30 | / | 0.47 | / | / | 1.20 | / | / | / | / | 66.23 |
| Example 8 | 29.23 | 0.63 | 0.31 | 1.01 | 0.30 | / | 0.47 | / | 1.20 | 1.05 | / | / | / | / | 65.80 |
| Example 9 | 29.86 | 0.62 | 0.33 | 0.99 | 0.34 | 0.10 | / | / | 1.30 | / | / | 0.09 | 0.07 | <0.07 | 66.30 |
| Example 10 | 29.23 | 0.65 | 0.28 | 0.99 | 0.32 | 0.10 | / | / | 1.60 | / | / | 0.09 | 0.07 | <0.07 | 66.67 |
| Example 11 | 29.86 | 0.62 | 0.33 | 0.99 | 0.34 | 0.10 | / | / | / | 1.30 | / | 0.09 | 0.07 | <0.07 | 66.31 |
| Example 12 | 29.23 | 0.65 | 0.28 | 0.99 | 0.32 | 0.10 | / | / | / | 1.60 | / | 0.09 | 0.07 | <0.07 | 66.67 |
| Example 13 | 26.50 | 0.58 | / | 1.00 | 0.25 | 0.27 | / | / | 1.05 | 1.05 | / | 0.00 | / | / | 69.30 |
| Example 14 | 29.89 | 0.58 | 0.28 | 0.99 | / | 0.40 | / | / | 1.05 | / | / | / | / | / | 66.81 |
| Example 15 | 29.89 | 0.58 | 0.29 | 0.99 | / | / | 0.78 | / | 1.05 | / | / | / | / | / | 66.41 |
| Example 16 | 29.89 | 0.58 | 0.15 | 0.99 | / | 0.20 | 0.40 | / | 1.05 | / | / | / | / | / | 66.73 |
| Example 17 | 29.86 | 0.62 | 0.33 | 0.99 | 0.34 | 0.10 | / | / | 0.98 | / | / | 0.09 | 0.07 | <0.07 | 66.63 |
| Example 18 | 29.23 | 0.65 | 0.28 | 0.99 | 0.32 | 0.10 | / | / | / | 1.65 | / | 0.09 | 0.07 | <0.07 | 66.62 |
| Example 19 | 29.23 | 0.62 | 0.33 | 0.99 | 0.33 | 0.23 | / | / | / | / | 1.55 | / | / | / | 66.71 |
| Example 20 | 29.89 | 0.63 | 0.29 | 0.99 | / | 0.34 | 0.13 | / | 1.05 | / | 1.55 | / | / | 0.07 | 65.06 |
| Example 21 | 29.89 | 0.63 | 0.29 | 0.99 | / | 0.37 | 0.13 | / | 1.05 | / | 1.55 | / | / | 0.07 | 65.03 |
| Example 22 | 29.89 | 0.63 | 0.29 | 0.99 | / | 0.41 | / | / | 1.05 | / | 1.55 | / | / | 0.07 | 65.12 |
| Example 23 | 29.89 | 0.63 | 0.29 | 0.99 | / | 0.34 | 0.13 | / | 1.05 | / | 0.80 | / | / | 0.07 | 65.81 |
| Example 24 | 29.89 | 0.63 | 0.29 | 0.99 | / | 0.37 | 0.13 | / | 1.05 | / | 2.20 | / | / | 0.07 | 64.38 |
| Example 25 | 29.85 | 0.63 | 0.31 | 1.01 | 0.30 | / | / | 0.47 | / | / | / | / | / | / | 67.43 |

EP 4 318 504 A1

(continued)

| | Nd | Cu | Ga | B | Zr | Ti | Nb | Hf | Tb | Dy | Co | C | O | Al | Fe |
|---|---|---|---|---|---|---|---|---|---|---|---|---|---|---|---|
| Comparative Example 1 | 29.23 | 0.30 | 0.33 | 0.99 | 0.33 | 0.23 | / | / | / | / | / | / | / | / | 68.59 |
| Comparative Example 2 | 29.85 | 0.63 | 0.08 | 1.01 | 0.30 | / | 0.47 | / | / | / | / | / | / | / | 67.67 |
| Comparative Example 3 | 29.51 | 0.70 | 0.20 | 1.00 | 0.23 | 0.17 | 0.22 | / | / | / | / | / | / | / | 67.96 |
| Comparative Example 4 | 29.85 | 0.63 | 0.31 | 0.95 | 0.30 | / | 0.47 | / | / | / | / | / | / | / | 67.49 |
| Comparative Example 5 | 29.85 | 0.63 | 0.31 | 1.01 | / | / | / | / | / | / | / | / | / | / | 68.20 |

Note: "/" indicates that the element is not contained in the R-T-B-based permanent magnet material; and values in Table 4 represent the mass percentage of the mass of each component in the total mass of the R-T-B-based permanent magnet material.

2. Test of magnetic properties: magnetic properties of the R-T-B-based permanent magnet materials prepared in Examples 1 to 24 and Comparative Examples 1 to 4 were tested by using the NIM-10000H BH large rare earth permanent magnet nondestructive measurement system of National Institute of Metrology, China (test samples are cylinders with a diameter D of 10 mm and a thickness of 10 mm). Test results are shown in Table 5.

In the table,

"Br" refers to remanence. After a permanent magnet material is subjected to saturation magnetization, the magnetism that can be maintained after an external magnetic field is removed is called remanence.

"Hc" refers to coercivity. Hcj refers to magnetic polarization coercivity (intrinsic coercivity); and Hcb refers to magnetic induction coercivity.

"(BH)max" refers to maximum magnetic energy product.

"Hk" refers to knee-point coercivity.

"Hk/Hcj" refers to squareness ratio.

"HD5" is a technical indicator that defines the squareness ratio. According to conventions in the art, points a (H=0.2Hcj) and b (H=0.7Hcj) on a J-H demagnetization curve are taken and connected via a straight line, a straight line parallel to ab is drawn based on the 0.95Br point, and the abscissa of an intersection point of the straight line and the J-H demagnetization curve is HD5.

A formula for calculating the temperature coefficient $\alpha$ of Br is as follows : (

$$\frac{Br_{high\ temprature} - Br_{room\ temperature}}{Br_{room\ temperature}(high\ temperature - room\ temperature)} \times 100\%.$$

In the formula, the room temperature is 20°C, and the high temperature is 80°C or 140°C.

Table 5

| | Br (kGs) | Hcb (kOe) | Hcj (kOe) | (BH)max (MGOe) | Hk (kOe) | Hk/Hcj | HD5 (kOe) | Absolute value of temperature coefficient α(Br) %/°C of Br at 20-80°C | Absolute value of temperature coefficient α(Br)%/°C of Br at 20-140°C |
|---|---|---|---|---|---|---|---|---|---|
| Example 1 | 14.94 | 14.50 | 14.85 | 54.18 | 14.81 | 0.997 | 14.70 | 0.11 | 0.12 |
| Example 2 | 14.65 | 14.22 | 15.13 | 52.09 | 15.07 | 0.996 | 14.95 | 0.11 | 0.12 |
| Example 3 | 14.90 | 14.47 | 14.53 | 53.89 | 14.50 | 0.998 | 13.22 | 0.11 | 0.12 |
| Example 4 | 14.70 | 14.41 | 14.89 | 52.96 | 14.74 | 0.99 | 14.74 | 0.11 | 0.12 |
| Example 5 | 14.88 | 14.59 | 15.19 | 53.74 | 15.04 | 0.99 | 15.04 | 0.11 | 0.12 |
| Example 6 | 14.07 | 13.79 | 21.28 | 48.52 | 21.07 | 0.99 | 21.07 | 0.10 | 0.11 |
| Example 7 | 13.98 | 13.71 | 21.30 | 47.90 | 21.09 | 0.99 | 21.09 | 0.10 | 0.11 |
| Example 8 | 13.70 | 13.43 | 23.20 | 46.00 | 22.97 | 0.99 | 22.97 | 0.10 | 0.11 |
| Example 9 | 13.76 | 13.40 | 20.84 | 45.93 | 20.55 | 0.99 | 20.50 | 0.10 | 0.11 |
| Example 10 | 13.65 | 13.15 | 21.17 | 44.80 | 20.71 | 0.99 | 20.74 | 0.10 | 0.11 |
| Example 11 | 13.78 | 13.32 | 17.71 | 45.83 | 17.47 | 0.99 | 17.46 | 0.10 | 0.11 |
| Example 12 | 13.76 | 13.30 | 18.12 | 45.61 | 17.85 | 0.99 | 17.83 | 0.10 | 0.11 |
| Example 13 | 14.47 | 14.05 | 18.92 | 51.32 | 18.73 | 0.99 | 18.73 | 0.10 | 0.11 |
| Example 14 | 14.16 | 13.75 | 19.04 | 49.14 | 18.85 | 0.99 | 18.84 | 0.10 | 0.11 |
| Example 15 | 14.05 | 13.91 | 19.36 | 48.86 | 19.17 | 0.99 | 19.16 | 0.10 | 0.11 |
| Example 16 | 14.10 | 13.96 | 19.24 | 49.21 | 19.05 | 0.99 | 19.05 | 0.10 | 0.11 |
| Example 17 | 14.02 | 13.88 | 19.17 | 48.65 | 18.98 | 0.99 | 18.98 | 0.11 | 0.12 |
| Example 18 | 14.03 | 13.89 | 17.45 | 48.72 | 17.28 | 0.99 | 17.28 | 0.11 | 0.12 |
| Example 19 | 14.85 | 14.70 | 14.42 | 54.58 | 14.28 | 0.99 | 14.28 | 0.11 | 0.12 |
| Example 20 | 14.77 | 14.62 | 18.74 | 54.00 | 18.55 | 0.99 | 18.55 | 0.11 | 0.12 |
| Example 21 | 14.74 | 14.59 | 18.90 | 53.78 | 18.71 | 0.99 | 18.71 | 0.12 | 0.12 |
| Example 22 | 14.76 | 14.61 | 18.60 | 53.93 | 18.41 | 0.99 | 18.41 | 0.11 | 0.12 |
| Example 23 | 14.75 | 14.60 | 18.60 | 53.85 | 18.41 | 0.99 | 18.41 | 0.12 | 0.13 |
| Example 24 | 14.13 | 13.99 | 18.95 | 49.42 | 18.76 | 0.99 | 18.76 | 0.13 | 0.14 |

| | Br (kGs) | Hcb (kOe) | Hcj (kOe) | (BH)max (MGOe) | Hk (kOe) | Hk/Hcj | HD5 (kOe) | Absolute value of temperature coefficient $\alpha$(Br) %/°C of Br at 20-80°C | Absolute value of temperature coefficient $\alpha$(Br)%/°C of Br at 20-140°C |
|---|---|---|---|---|---|---|---|---|---|
| Example 25 | 14.65 | 14.22 | 16.30 | 53.12 | 16.14 | 0.99 | 16.14 | 0.11 | 0.12 |
| Comparative Example 1 | 14.92 | 14.21 | 14.08 | 53.00 | 13.38 | 0.95 | 13.38 | 0.12 | 0.13 |
| Comparative Example 2 | 14.65 | 13.95 | 13.54 | 51.10 | 12.73 | 0.94 | 12.73 | 0.12 | 0.13 |
| Comparative Example 3 | 14.90 | 14.19 | 14.06 | 52.86 | 13.22 | 0.94 | 13.22 | 0.13 | 0.14 |
| Comparative Example 4 | 14.73 | 13.90 | 14.23 | 51.17 | 13.23 | 0.93 | 13.23 | 0.12 | 0.13 |
| Comparative Example 5 | 14.80 | 14.22 | 12.60 | 51.66 | 11.84 | 0.94 | 12.97 | 0.12 | 0.13 |

EP 4 318 504 A1

3. Test of consistency of magnetic properties: test results are shown in Table 6.

(1) Squareness ratio SQ=Hk/Hcj, where, Hk is a value of a corresponding external magnetic field H in a case that B is 90%Br, and Hcj is coercivity.

(2) Relative permeability is equal to Br/Hcb, where, Br is remanence, and Hcb is magnetic induction coercivity. In a case that there is an inflection point in a B-H curve, the permeability takes the value before the inflection point.

(3) Max (Hcj)-Min (Hcj): a maximum value of the coercivity of a product minus a minimum value of the coercivity of a product in the same batch. If the result is greater than 1.5 kOe, the consistency of the magnetic properties is poor.

Table 6

|  | Relative permeability | Squareness ratio (%) | Max (Hcj)-Min (Hcj)/(kOe) |
|---|---|---|---|
| Example 1 | 1.03 | 99.70 | 0.30 |
| Example 2 | 1.03 | 99.60 | 0.20 |
| Example 3 | 1.03 | 99.80 | 0.30 |
| Example 4 | 1.02 | 99.60 | 0.20 |
| Example 5 | 1.02 | 99.80 | 0.25 |
| Example 6 | 1.02 | 99.00 | 0.20 |
| Example 7 | 1.02 | 99.00 | 0.15 |
| Example 8 | 1.02 | 99.00 | 0.20 |
| Example 9 | 1.02 | 98.60 | 0.15 |
| Example 10 | 1.02 | 98.20 | 0.15 |
| Example 11 | 1.02 | 98.60 | 0.15 |
| Example 12 | 1.02 | 98.60 | 0.15 |
| Example 13 | 1.02 | 99.00 | 0.20 |
| Example 14 | 1.01 | 99.00 | 0.20 |
| Example 15 | 1.01 | 99.00 | 0.20 |
| Example 16 | 1.01 | 99.00 | 0.10 |
| Example 17 | 1.01 | 99.00 | 0.30 |
| Example 18 | 1.01 | 99.00 | 0.30 |
| Example 19 | 1.01 | 99.00 | 0.30 |
| Example 20 | 1.01 | 99.00 | 0.30 |
| Example 21 | 1.01 | 99.00 | 0.25 |
| Example 22 | 1.01 | 99.00 | 0.30 |
| Example 23 | 1.01 | 99.00 | 0.40 |
| Example 24 | 1.01 | 99.00 | 0.50 |
| Example 25 | 1.03 | 99.70 | 0.20 |
| Comparative Example 1 | 1.05 | 95.00 | 0.60 |
| Comparative Example 2 | 1.05 | 94.00 | 0.70 |
| Comparative Example 3 | 1.05 | 94.00 | 0.60 |

(continued)

|  | Relative permeability | Squareness ratio (%) | Max (Hcj)-Min (Hcj)/(kOe) |
|---|---|---|---|
| Comparative Example 4 | 1.06 | 93.00 | 0.80 |
| Comparative Example 5 | 1.06 | 94.00 | 0.80 |

Analysis of the test results of the magnetic properties and the consistency of the magnetic properties shown in Table 4 and Table 5 is as follows:

1) Comparative Example 1: on the basis of Example 1, the content of Cu is reduced to make it insufficient, and other conditions remain unchanged.

At room temperature, compared with the R-T-B-based permanent magnet material of Example 1, Br, Hcb, Hcj, (BH)max, Hk, Hk/Hcj, and HD5 of the R-T-B-based permanent magnet material of Comparative Example 1 are all lower. At high temperature, compared with the R-T-B-based permanent magnet material of Example 1, the absolute value of the temperature coefficient $\alpha$ of Br of the R-T-B-based permanent magnet material of Comparative Example 1 is larger, and high-temperature properties are poorer. Furthermore, the relative permeability is higher, the squareness ratio is smaller, and the consistency of the magnetic properties is poorer.

2) Comparative Example 2: on the basis of Example 2, the content of Ga is reduced to make it insufficient, and other conditions remain unchanged.

At room temperature, compared with the R-T-B-based permanent magnet material of Example 2, Hcb, Hcj, (BH)max, Hk, Hk/Hcj, and HD5 of the R-T-B-based permanent magnet material of Comparative Example 2 are all lower. At high temperature, compared with the R-T-B-based permanent magnet material of Example 2, the absolute value of the temperature coefficient $\alpha$ of Br of the R-T-B-based permanent magnet material of Comparative Example 2 is larger, and high-temperature properties are poorer. Furthermore, the relative permeability is higher, the squareness ratio is smaller, and the consistency of the magnetic properties is poorer.

3) Comparative Example 3: compared with Example 3, the content of Cu is increased to make it excessive, the content of Ga is reduced to make it insufficient, and other conditions remain unchanged.

At room temperature, compared with the R-T-B-based permanent magnet material of Example 3, Hcb, Hcj, (BH)max, Hk, and Hk/Hcj of the R-T-B-based permanent magnet material of Comparative Example 3 are all lower. At high temperature, compared with the R-T-B-based permanent magnet material of Example 3, the absolute value of the temperature coefficient $\alpha$ of Br of the R-T-B-based permanent magnet material of Comparative Example 3 is larger, and high-temperature properties are poorer. Furthermore, the relative permeability is higher, the squareness ratio is smaller, and the consistency of the magnetic properties is poorer.

4) Comparative Example 4: on the basis of Example 2, the content of B is reduced to make it insufficient, and other conditions remain unchanged.

At room temperature, compared with the R-T-B-based permanent magnet material of Example 2, Hcb, Hcj, (BH)max, Hk, Hk/Hcj, and HD5 of the R-T-B-based permanent magnet material of Comparative Example 4 are all lower. At high temperature, compared with the R-T-B-based permanent magnet material of Example 2, the absolute value of the temperature coefficient $\alpha$ of Br of the R-T-B-based permanent magnet material of Comparative Example 4 is larger, and high-temperature properties are poorer. Furthermore, the relative permeability is higher, and the consistency of the magnetic properties is poor.

5) Comparative Example 5: on the basis of Example 2, N is added, and other conditions remain unchanged.

At room temperature, compared with the R-T-B-based permanent magnet material of Example 3, Hcj, (BH)max, Hk, Hk/Hcj, and HD5 of the R-T-B-based permanent magnet material of Comparative Example 5 are all lower. At high temperature, compared with the R-T-B-based permanent magnet material of Example 2, the absolute value of the temperature coefficient $\alpha$ of Br of the R-T-B-based permanent magnet material of Comparative Example 5 is larger, and high-temperature properties are poorer. Furthermore, the relative permeability is higher, the squareness ratio is smaller, and the consistency of the magnetic properties is poorer.

4. Measurement of the content of heavy rare earth elements: the contents of heavy rare earth elements at different positions on the surfaces of the R-T-B-based permanent magnet materials of Examples 1 to 25 were measured by using an ICP. Results show that a difference in the contents of heavy rare earth elements is only 0.01-0.07 mas%, which indicates that the contents of heavy rare earth elements are almost the same. It can be seen that the heavy rare earth elements are uniformly distributed in the R-T-B-based permanent magnet materials of Examples 1 to 25, and the properties are uniform.

**Claims**

1.  An R-T-B-based permanent magnet material, comprising the following component by mass content:

    26.5-32.0 mas% of R that is a rare earth element containing at least Nd;
    0.58-0.65 mas% of Cu;
    0.21-0.33 mas% of Ga;
    $\geq$0.99 mas% of B;
    64.0-69.5 mas% of Fe; and
    0.15-1.2 mas% of N that is one or more of Zr, Ti, Nb, and Hf,
    the percentage being the mass percentage of the mass of each component in the total mass of the R-T-B-based permanent magnet material.

2.  The R-T-B-based permanent magnet material according to claim 1, wherein the R-T-B-based permanent magnet material comprises a Re-rich phase, a boride, and a main phase grain;

    preferably, the Re-rich phase is a Nd-rich phase; the boride is one or more of ZrB, HfB, NbB, and TiB; and the main phase grain is a $Nd_2Fe_{14}B$ grain;
    more preferably, Cu and Ga are distributed in the Re-rich phase, the abundance of Cu in the Re-rich phase is preferably more than 95% of Cu, and the abundance of Ga in the Re-rich phase is preferably more than 95% of Ga;
    more preferably, Ga is distributed in the main phase grain, the abundance of Ga in the main phase grain is less than 5% of Ga; and
    more preferably, N is distributed at a grain boundary between the Re-rich phase and the boride, N at the grain boundary preferably binds with B to form the boride, the abundance of N distributed at the grain boundary is preferably more than 95% of N, N preferably replaces Fe in the main phase grain and is distributed in the main phase grain, and the abundance of N replacing Fe in the main phase grain is preferably less than 5% of N.

3.  The R-T-B-based permanent magnet material according to claim 1 or 2, wherein the content of R is 29.0-31.0 mas%, and preferably 29.2-29.95 mas%, such as 29.23 mas%, 29.36 mas%, 29.37 mas%, 29.51 mas%, 29.66 mas%, 29.85 mas%, 29.86 mas% or 29.89 mas%; and the percentage is the mass percentage of the mass of R in the total mass of the R-T-B-based permanent magnet material;

    the content of Nd is preferably 29.23-29.89 mas%, and more preferably 29.36-29.86 mas%, such as 29.23 mas%, 29.36 mas%, 29.37 mas%, 29.51 mas%, 29.66 mas%, 29.85 mas%, 29.86 mas% or 29.89 mas%; and the percentage is the mass percentage of the mass of Nd in the total mass of the R-T-B-based permanent magnet material;
    R preferably further contains Pr, the content of Pr is preferably 0-0.3 mas% and is not 0 mas%; and the percentage is the mass percentage of the mass of Pr in the total mass of the R-T-B-based permanent magnet material;
    and/or, the content of Cu is 0.62-0.65 mas%, such as 0.63 mas%, 0.64 mas% or 0.65 mas%; and the percentage is the mass percentage of the mass of Cu in the total mass of the R-T-B-based permanent magnet material;
    and/or, the content of Ga is 0.28-0.32 mas%, such as 0.29 mas%, 0.30 mas%, 0.31 mas% or 0.32 mas%; and the percentage is the mass percentage of the mass of Ga in the total mass of the R-T-B-based permanent magnet material;
    and/or, the content of B is 0.99-1.15 mas%, and preferably 1.00-1.05 mas%, such as 1.00 mas% or 1.01 mas%; and the percentage is the mass percentage of the mass of B in the total mass of the R-T-B-based permanent magnet material;
    and/or, a ratio of the atom percentage of R to the atom percentage of B is less than 2.50, such as 0.45;
    and/or, a ratio of the atom percentage of Fe to the atom percentage of B is less than 14.0, such as 0.08;
    and/or, the content of Fe is 64.3-69.3 mas%, such as 64.38 mas%, 65.03 mas%, 65.06 mas%, 65.12 mas%, 65.8 mas%, 65.81 mas%, 66.23 mas%, 66.3 mas%, 66.31 mas%, 66.41 mas%, 66.62 mas%, 66.63 mas%, 66.67 mas%, 66.71 mas%, 66.73 mas%, 66.77 mas%, 66.81 mas%, 67.43 mas%, 67.76 mas%, 67.94 mas%, 68.18 mas% or 68.27 mas%; and the percentage is the mass percentage of the mass of Fe in the total mass of the R-T-B-based permanent magnet material;

and/or, the content of N is 0.4-0.78 mas%, and preferably 0.44-0.64 mas%, such as 0.40 mas%, 0.41 mas%, 0.42 mas%, 0.44mas%, 0.47 mas%, 0.50 mas%, 0.52 mas%, 0.55 mas%, 0.56 mas%, 0.60 mas%, 0.62 mas%, 0.64 mas%, 0.77 mas% or 0.78 mas%; and the percentage is the mass percentage of the mass of N in the total mass of the R-T-B-based permanent magnet material;

and/or, in a case that N contains Zr, the content of Zr is 0.22-0.44 mas%, and preferably 0.32-0.34 mas%, such as 0.23 mas%, 0.25 mas%, 0.30 mas%, 0.31 mas% or 0.33 mas%; and the percentage is the mass percentage of the mass of Zr in the total mass of the R-T-B-based permanent magnet material;

and/or, in a case that N contains Ti, the content of Ti is 0-0.41 mas% and is not 0 mas%, and preferably 0.18-0.3 mas%, such as 0.10 mas%, 0.15 mas%, 0.17 mas%, 0.20 mas%, 0.23 mas%, 0.24 mas%, 0.27 mas%, 0.34 mas%, 0.37 mas% or 0.40 mas%; and the percentage is the mass percentage of the mass of Ti in the total mass of the R-T-B-based permanent magnet material;

and/or, in a case that N contains Nb, the content of Nb is 0-1.0 mas% and is not 0 mas%, and preferably 0.1-0.78 mas%, such as 0.13 mas%, 0.22 mas%, 0.27 mas%, 0.40 mas%, 0.47 mas% or 0.78 mas%; and the percentage is the mass percentage of the mass of Nb in the total mass of the R-T-B-based permanent magnet material;

and/or, in a case that N contains Hf, the content of Hf is 0-0.8 mas% and is not 0 mas%, and preferably 0.47 mas%; and the percentage is the mass percentage of the mass of Hf in the total mass of the R-T-B-based permanent magnet material.

4. The R-T-B-based permanent magnet material according to claim 3, wherein N is Nb; the content of Nb is preferably 0.4-0.8 mas%, and more preferably 0.78 mas%; and the percentage is the mass percentage of the mass of Nb in the total mass of the R-T-B-based permanent magnet material;

or, N is Zr and Ti; the content of Zr is preferably 0.25-0.44 mas%, and more preferably 0.25 mas%, 0.31 mas%, 0.32 mas% or 0.33 mas%; the percentage is the mass percentage of the mass of Zr in the total mass of the R-T-B-based permanent magnet material; the content of Ti is preferably 0.1-0.27 mas%, and more preferably 0.10 mas%, 0.15 mas%, 0.17 mas%, 0.23 mas%, 0.24 mas% or 0.27 mas%; the percentage is the mass percentage of the mass of Ti in the total mass of the R-T-B-based permanent magnet material; and further preferably, N is 0.33 mas% of Zr and 0.23 mas% of Ti; or 0.31 mas% of Zr and 0.24 mas% of Ti; or 0.34 mas% of Zr and 0.1 mas% of Ti; or 0.32 mas% of Zr and 0.1 mas% of Ti; or 0.25 mas% of Zr and 0.27 mas% of Ti;

or, N is Nb and Ti; the content of Nb is preferably 0.10-0.45 mas%, and more preferably 0.13 mas% or 0.40 mas%; the percentage is the mass percentage of the mass of Nb in the total mass of the R-T-B-based permanent magnet material; the content of Ti is preferably 0-0.41 mas% and is not 0 mas%, and more preferably 0.20 mas%, 0.34 mas% or 0.37 mas%; the percentage is the mass percentage of the mass of Ti in the total mass of the R-T-B-based permanent magnet material; and further preferably, N is 0.20 mas% of Ti and 0.40 mas% of Nb; or 0.34 mas% of Ti and 0.13 mas% of Nb; or 0.37 mas% of Ti and 0.13 mas% of Nb;

or, N is Zr, Nb, and Ti; the sum of the content of Zr, Nb, and Ti is preferably 0.405-0.78 mas%, and more preferably 0.62 mas% or 0.64 mas%; the content of Zr is preferably 0.2-0.3 mas%, and more preferably 0.22 mas% or 0.23 mas%; the percentage is the mass percentage of the mass of Zr in the total mass of the R-T-B-based permanent magnet material; the content of Nb is preferably 0.14-0.2 mas%, and more preferably 0.15 mas% or 0.17 mas%; the percentage is the mass percentage of the mass of Nb in the total mass of the R-T-B-based permanent magnet material; the content of Ti is preferably 0.2-0.3 mas%, and more preferably 0.22 mas% or 0.27 mas%; the percentage is the mass percentage of the mass of Ti in the total mass of the R-T-B-based permanent magnet material; and further preferably, N is 0.23 mas% of Zr, 0.17 mas% of Ti, and 0.22 mas% of Nb; or 0.22 mas% of Zr, 0.15 mas% of Ti, and 0.27 mas% of Nb;

and/or, the R-T-B-based permanent magnet material further comprises RH that is a heavy rare earth element; in a case that the R-T-B-based permanent magnet material comprises RH, and the R-T-B-based permanent magnet material further comprises a shell of the main phase grain;

the shell of the main phase grain preferably comprises a RH2Fe14B grain, RH is preferably distributed in the shell of the main phase grain; and the abundance of RH in the shell of the main phase grain is preferably more than 95% of RH;

types of RH preferably comprise one or more of Dy, Tb, and Ho; the content of RH is preferably 0.98-2.4 mas%, more preferably 1.05-2.10 mas%, and further preferably 1.05-1.6 mas%, such as 1.05 mas%, 1.2 mas%, 1.3 mas%, 1.5 mas%, 1.6 mas%, 1.65 mas%, 2.1 mas% or 2.25 mas%; and the percentage is the mass percentage of the mass of RH in the total mass of the R-T-B-based permanent magnet material;

in a case that RH contains Dy, the content of Dy is preferably 1.05-1.6 mas%, such as 1.2 mas%, 1.3 mas%, 1.60 mas% or 1.65 mas%; the percentage is the mass percentage of the mass of Dy in the total mass of the R-T-B-based permanent magnet material; in a case that RH contains Tb, the content of Tb is preferably 1.05-1.6 mas%, such as 1.3 mas%; and the percentage is the mass percentage of the mass of Tb in the total mass of the R-T-B-based permanent magnet material;

more preferably, RH is Tb; the content of Tb is preferably 0.98-1.60 mas%, and more preferably 1.05-1.60 mas%, such as 1.30 mas% or 1.50 mas%; and the percentage is the mass percentage of the mass of Tb in the total mass of the R-T-B-based permanent magnet material;

more preferably, RH is Dy; the content of Dy is preferably 1.00-1.80 mas%, and more preferably 1.05-1.60 mas%, such as 1.20 mas% or 1.30 mas%; and the percentage is the mass percentage of the mass of Dy in the total mass of the R-T-B-based permanent magnet material;

more preferably, RH is Tb and Dy, the content of Tb is preferably 1.00-1.65 mas%, and more preferably 1.20 mas% or 1.60 mas%; the percentage is the mass percentage of the mass of Tb in the total mass of the R-T-B-based permanent magnet material; the content of Dy is preferably 1.00-1.60 mas%, and more preferably 1.05 mas%; the percentage is the mass percentage of the mass of Dy in the total mass of the R-T-B-based permanent magnet material; and further preferably, RH is 1.20 mas% of Tb and 1.05 mas% of Dy;

and/or, the R-T-B-based permanent magnet material further comprises Co;

in a case that the R-T-B-based permanent magnet material comprises Co, Co preferably replaces Fe in the main phase grain and is distributed in the main phase grain; the abundance of Co replacing Fe in the main phase grain is preferably more than 95% of Co; Co is further distributed at the grain boundary between the Re-rich phase and the boride; and the abundance of Co at the grain boundary is preferably less than 5% of Co;

the content of Co is preferably 0.8-2.2 mas%, and more preferably 1.5-2.0 mas%, such as 1.55 mas%; and the percentage is the mass percentage of the mass of Co in the total mass of the R-T-B-based permanent magnet material; and

in a case that the R-T-B-based permanent magnet material comprises Co, a ratio of the sum of the atom percentage of Co and Fe to the atom percentage of B is preferably less than 14, such as 12.65 or 13.13.

5. The R-T-B-based permanent magnet material according to claim 4, wherein the R-T-B-based permanent magnet material comprises the following components by mass content:

29.0-31.0 mas% of R that is a rare earth element containing at least Nd;
0.62-0.65 mas% of Cu;
0.28-0.32 mas% of Ga;
0.99-1.15 mas% of B;
64.3-69.3 mas% of Fe; and
0.4-0.78 mas% of N that is one or more of Zr, Ti, Nb, and Hf; and
the percentage is the mass percentage of the mass of each component in the total mass of the R-T-B-based permanent magnet material;
the R-T-B-based permanent magnet material preferably comprises the following components by mass content:

26.5-32.0 mas% of R that is a rare earth element containing at least Nd;
0.58-0.65 mas% of Cu;
0.21-0.33 mas% of Ga;
0.99-1.15 mas% of B;
64.0-69.5 mas% of Fe;
0.15-1.2 mas% of N that is one or more of Zr, Ti, Nb, and Hf; and
0.98-2.4 mas% of RH that is one or more of Dy, Tb, and Ho; and
the percentage is the mass percentage of the mass of each component in the total mass of the R-T-B-based permanent magnet material; and
the R-T-B-based permanent magnet material more preferably comprises the following components by mass content:

29.0-31.0 mas% of R that is a rare earth element containing at least Nd;
0.62-0.65 mas% of Cu;
0.28-0.32 mas% of Ga;
0.99-1.15 mas% of B;
64.3-69.3 mas% of Fe; and
0.4-0.78 mas% of N that is one or more of Zr, Ti, Nb, and Hf;

0.98-2.4 mas% of RH that is one or more of Dy, Tb, and Ho; and

0.8-2.2 mas% of Co; and

the percentage being the mass percentage of the mass of each component in the total mass of the R-T-B-based permanent magnet material.

6. A preparation method of the R-T-B-based permanent magnet material according to any one of claims 1 to 5, comprising the following steps: preparing the R-T-B-based permanent magnet material from a main alloy and an auxiliary alloy by the dual alloy method,

types of elements in the main alloy and the auxiliary alloy each comprising R, Cu, Ga, B, Fe, and N.

7. The preparation method of the R-T-B-based permanent magnet material according to claim 6, wherein a mass ratio of the main alloy to the auxiliary alloy is (4-49): 1, and preferably (9-33): 1, such as 9: 1, 11.5: 1, 14.38: 1, 15.67: 1, 19: 1, 24: 1 or 32.33: 1;

and/or, in the main alloy, R is a rare earth element containing at least Nd; the content of R is preferably 26.0-31.5 mas%, and more preferably 26.58 mas%, 29.5 mas%, 29.6 mas%, 29.7 mas%, 29.75 mas%, 29.85 mas%, 30.15 mas%, 30.16 mas%, 30.2 mas% or 30.46 mas%; the percentage is the mass percentage of the mass of R in the total mass of the main alloy; the content of Nd is preferably 26.5-31.0 mas%, and more preferably 26.58 mas%, 29.5 mas%, 29.6 mas%, 29.7 mas%, 29.75 mas%, 29.85 mas%, 30.15 mas%, 30.16 mas%, 30.2 mas% or 30.46 mas%; and the percentage is the mass percentage of the mass of Nd in the total mass of the main alloy; and/or, in the main alloy, the content of Cu is 0.3-0.5mas%, and preferably 0.345 mas%, 0.35 mas%, 0.36 mas%, 0.38 mas%, 0.4 mas%, 0.445 mas%, 0.45 mas% or 0.47 mas%; and the percentage is the mass percentage of the mass of Cu in the total mass of the main alloy; and/or, in the alloy, the content of Ga is 0.15-0.38 mas%, and preferably 0.16 mas%, 0.29 mas%, 0.3 mas%, 0.31 mas%, 0.33 mas% or 0.37 mas%; and the percentage is the mass percentage of the mass of Ga in the total mass of the main alloy; and/or, the main alloy, the content of B is 0.9-1.05mas%, and preferably 1.00 mas%, 1.02 mas%, 1.03 mas% or 1.04 mas%; and the percentage is the mass percentage of the mass of B in the total mass of the main alloy; and/or, in the main alloy, the content of Fe is 65.0-72.0 mas%, and preferably 65.47 mas%, 66.16 mas%, 66.17 mas%, 66.23 mas%, 66.55 mas%, 66.95 mas%, 67.32 mas%, 67.61 mas%, 67.62 mas%, 67.85 mas%, 67.88 mas%, 67.94 mas%, 68.12 mas%, 68.17 mas%, 68.28 mas%, 68.31 mas%, 68.76 mas%, 68.81 mas% or 71.14 mas%; and the percentage is the mass percentage of the mass of Fe in the total mass of the main alloy; and/or, in the main alloy, the content of N is 0.1-0.55 mas%, and preferably 0.11 mas%, 0.16 mas%, 0.22 mas%, 0.255 mas%, 0.265 mas%, 0.28 mas%, 0.285 mas%, 0.29 mas%, 0.41 mas%, 0.415 mas%, 0.42 mas%, 0.44 mas%, 0.5 mas% or 0.52 mas%; and the percentage is the mass percentage of the mass of N in the total mass of the main alloy;

in a case that N contains Zr, the content of Zr is preferably 0.05-0.2 mas%, and more preferably 0.16 mas%; the percentage is the mass percentage of the mass of Zr in the total mass of the main alloy; in a case that N contains Ti, the content of Ti is preferably 0.10-0.3 mas%, and more preferably 0.11 mas%, 0.145 mas%, 0.15 mas%, 0.16 mas%, 0.18 mas%, 0.21 mas%, 0.22 mas%, 0.25 mas%, 0.255 mas%, 0.265 mas% or 0.28 mas%; the percentage is the mass percentage of the mass of Ti in the total mass of the main alloy; and in a case that N contains Nb, the content of Nb is preferably 0.1-0.55 mas%, and more preferably 0.14 mas%, 0.21 mas%, 0.235 mas%, 0.28 mas%, 0.5 mas% or 0.52 mas%; and the percentage is the mass percentage of the mass of Nb in the total mass of the main alloy;

and/or, the main alloy further contains RH that is a heavy rare earth element;

types of RH preferably comprise one or more of Dy, Tb, and Ho; the content of RH is preferably 0.5-0.8 mas%, and more preferably 0.64 mas%; and the percentage is the mass percentage of the mass of RH in the total mass of the main alloy;

in a case that RH contains Dy, the content of Dy is preferably 0.05-0.35 mas%, such as 0.32 mas%; the percentage is the mass percentage of the mass of Dy in the total mass of the main alloy; in a case that RH contains Tb, the content of Tb is preferably 0.05-0.35 mas%, such as 0.32 mas%; the percentage is the mass percentage of the mass of Tb in the total mass of the main alloy; and RH is preferably Tb and Dy, and more preferably 0.32 mas% of Tb and 0.32 mas% of Dy;

and/or, the main alloy further contains Co; the content of Co is preferably 0.80-2.50 mas%, and more preferably 0.843 mas%, 1.63 mas%, 1.726 mas% or 2.32 mas%; and the percentage is the mass percentage of the mass of Co in the total mass of the main alloy;

and/or, the main alloy comprises the following components by mass content:

26.0-31.5 mas% of R that is a rare earth element containing at least Nd;

0.3-0.5 mas% of Cu;

0.15-0.38 mas% of Ga;

0.9-1.05 mas% of B;

65.0-72.0 mas% of Fe; and

0.1-0.55 mas% of N that is one or more of Zr, Ti, Nb, and Hf; and

the percentage is the mass percentage of the mass of each component in the total mass of the main alloy;

the main alloy preferably comprises the following components by mass content:

26.0-31.5 mas% of R that is a rare earth element containing at least Nd;

0.3-0.5 mas% of Cu;

0.15-0.38 mas% of Ga;

0.9-1.05 mas% of B;

65.0-72.0 mas% of Fe;

0.1-0.55 mas% of N that is one or more of Zr, Ti, Nb, and Hf; and

0.5-0.8 mas% of RH that is one or more of Dy, Tb, and Ho; and

the percentage is the mass percentage of the mass of each component in the total mass of the main alloy;

the main alloy more preferably comprises the following components by mass content:

26.0-31.5 mas% of R that is a rare earth element containing at least Nd;

0.3-0.5 mas% of Cu;

0.15-0.38 mas% of Ga;

0.9-1.05 mas% of B;

65.0-72.0 mas% of Fe;

0.1-0.55 mas% of N that is one or more of Zr, Ti, Nb, and Hf;

0.5-0.8 mas% of RH that is one or more of Dy, Tb, and Ho; and

0.80-2.50 mas% of Co; and

the percentage is the mass percentage of the mass of each component in the total mass of the main alloy; and/or in the auxiliary alloy, R is a rare earth element containing at least Nd; the content of R is preferably 10.0-30.0 mas%, and more preferably 25.0 mas%; the percentage is the mass percentage of the mass of R in the total mass of the auxiliary alloy; the content of Nd is preferably 10.0-30.0 mas%, and more preferably 25.0 mas%; and the percentage is the mass percentage of the mass of Nd in the total mass of the auxiliary alloy;

and/or, in the auxiliary alloy, the content of Cu is 3.00-6.00 mas%, and preferably 5.00 mas% or 5.5 mas%; and the percentage is the mass percentage of the mass of Cu in the total mass of the auxiliary alloy;

and/or, in the auxiliary alloy, the content of Ga is 3.00-6.00 mas%, and preferably 3.50 mas% or 5.00 mas%; and the percentage is the mass percentage of the mass of Ga in the total mass of the auxiliary alloy;

and/or, in the auxiliary alloy, the content of B is 0.30-0.70 mas%, and preferably 0.40 mas%, 0.50 mas% or 0.60 mas%; and the percentage is the mass percentage of the mass of B in the total mass of the auxiliary alloy;

and/or, in the auxiliary alloy, the content of Fe is 34.0-68.5 mas%, and preferably 34.4 mas%, 42 mas%, 43.7 mas%, 44 mas%, 44.5 mas%, 45 mas%, 45.5 mas%, 46.5 mas%, 47 mas%, 53.2 mas% or 68.2 mas%; and the percentage is the mass percentage of the mass of Fe in the total mass of the auxiliary alloy;

and/or, in the auxiliary alloy, the content of N is 3.00-6.00 mas%, and preferably 3.00 mas%, 3.3 mas%, 4 mas%, 4.5 mas%, 5.00 mas%, 5.50 mas% or 5.80 mas%; and the percentage is the mass percentage of the mass of N in the total mass of the auxiliary alloy;

in a case that N contains Zr, the content of Zr is preferably 3.00-5.60 mas%, and more preferably 3.3 mas%, 4 mas%, 4.5 mas%, 5 mas% or 5.50 mas%; the percentage is the mass percentage of the mass of Zr in the total mass of the auxiliary alloy; in a case that N contains Ti, the content of Ti is preferably 3.0-5.00 mas%, and more preferably 4 mas% or 4.5 mas%; the percentage is the mass percentage of the mass of Ti in the total mass of the auxiliary alloy; and in a case that N contains Nb, the content of Nb is preferably 3.5-6.00 mas%, and more preferably 4 mas% or 5.8 mas%; and the percentage is the mass percentage of the mass of Nb in the total mass of the auxiliary alloy;

and/or, the auxiliary alloy further contains RH that is a heavy rare earth element; types of RH preferably comprise one or more of Dy, Tb, and Ho; the content of RH is preferably 30.00-40.00 mas%, and more preferably 37.5 mas%; and the percentage is the mass percentage of the mass of RH in the total mass of the auxiliary alloy;

in a case that RH contains Dy, the content of Dy is preferably 12.00-25.00 mas%, and more preferably 15 mas%, 17.5 mas% or 20.00 mas%; the percentage is the mass percentage of the mass of Dy in the total mass of the auxiliary alloy; and in a case that RH contains Tb, the content of Tb is preferably 10.00-25.0 mas%, and more preferably 20 mas%; and the percentage is the mass percentage of the mass of Tb in the total mass of the auxiliary alloy;

RH is preferably Tb and Dy, and more preferably 20 mas% of Tb and 17.5 mas% of Dy, or 15 mas% of Tb and 15 mas% of Dy;

and/or, the auxiliary alloy comprises the following components by mass content:

10.0-30.0 mas% of R that is a rare earth element containing at least Nd;
3.00-6.00 mas% of Cu;
3.00-6.00 mas% of Ga;
0.30-0.70 mas% of B;
34.0-68.5 mas% of Fe; and
3.00-6.00 mas% of N that is one or more of Zr, Ti, Nb, and Hf; and
the percentage is the mass percentage of the mass of each component in the total mass of the auxiliary alloy; and
the auxiliary alloy preferably comprises the following components by mass content:

10.0-30.0 mas% of R that is a rare earth element containing at least Nd;
3.00-6.00 mas% of Cu;
3.00-6.00 mas% of Ga;
0.30-0.70 mas% of B;
34.0-68.5 mas% of Fe;
3.00-6.00 mas% of N that is one or more of Zr, Ti, Nb, and Hf; and
30.00-40.00 mas% of RH that is one or more of Dy, Tb, and Ho; and
the percentage is the mass percentage of the mass of each component in the total mass of the auxiliary alloy.

8.  The preparation method of the R-T-B-based permanent magnet material according to claim 6 or 7, wherein the dual alloy preparation process comprises: sintering and ageing mixed alloy powder of the main alloy and the auxiliary alloy in sequence;

the mixed alloy powder is preferably prepared by mixing the main alloy with the auxiliary alloy; the mixing is preferably uniform mixing; the uniform mixing preferably comprises: mixing the main alloy with the auxiliary alloy, and then performing hydrogen decrepitation and jet milling, or performing hydrogen decrepitation and jet milling on the main alloy and the auxiliary alloy separately, and then uniformly mixing;
the hydrogen decrepitation preferably comprises: performing saturated hydrogen absorption under a hydrogen pressure of 0.067-0.098 MPa and dehydrogenization at 480-580°C, and more preferably comprises: performing saturated hydrogen absorption under a hydrogen pressure of 0.067-0.098 MPa and dehydrogenization at 550°C; and a particle size of the powder subjected to jet milling is preferably 3.8-4.2 $\mu$m, and more preferably 3.9 $\mu$m;
the sintering temperature is preferably above 1000°C, more preferably 1050-1200°C, and further preferably 1070°C; and the sintering time is preferably 4-7 h, and more preferably 6 h; and further preferably, the sintering further comprises back-sintering; the back-sintering temperature is preferably 1050-1100°C, and more preferably 1080°C; and the back-sintering time is preferably 3-5 h, and more preferably 4 h;
the ageing preferably comprises primary ageing and secondary ageing;
the primary ageing is preferably performed under argon atmosphere; the purity of argon under the argon atmosphere is higher than 99.9%; the primary ageing temperature is preferably 800-950°C, and more preferably 900°C, and the primary ageing time is preferably 2-4 h, and more preferably 3 h;
the secondary ageing temperature is preferably 430-490°C, and more preferably 490°C; and the secondary ageing time is preferably 2-4 h, and more preferably 3 h;
a rate at which the temperature rises to the primary ageing temperature or the secondary ageing temperature is preferably 3-5°C/min;
and/or, a preparation method of the main alloy comprises: preparing the elements in the main alloy into a main alloy solution; allowing the main alloy solution to pass through a rotating copper roller, refining and casting in sequence, and cooling to prepare a main alloy cast piece;
a rotation speed of the copper roller is preferably 40±0.2 rpm; the refining temperature is preferably 1520±20°C; the casting temperature is preferably 1420±10°C; and the cooling is preferably cooling to below 50°C;
and/or, a preparation method of the auxiliary alloy comprises: preparing the elements in the auxiliary alloy into an auxiliary alloy solution, allowing the auxiliary alloy solution to pass through a rotating copper roller, refining and casting in sequence, and cooling to prepare an auxiliary alloy cast piece; and
a rotation speed of the copper roller is preferably 40±0.2 rpm; the refining temperature is preferably 1400-1570°C; the casting temperature is preferably 1420-1470°C; and the cooling is preferably cooling to below 50°C.

9. An R-T-B-based permanent magnet material, wherein the R-T-B-based permanent magnet material is prepared by the preparation method of the R-T-B-based permanent magnet material according to any one of claims 6 to 8.

10. Application of the R-T-B-based permanent magnet material according to any one of claims 1 to 5 and 9 as an electronic component.

## INTERNATIONAL SEARCH REPORT

| International application No. |
|---|
| **PCT/CN2022/072254** |

| A. | CLASSIFICATION OF SUBJECT MATTER |
|---|---|

H01F 1/057(2006.01)i; H01F 41/02(2006.01)i

According to International Patent Classification (IPC) or to both national classification and IPC

| B. | FIELDS SEARCHED |
|---|---|

Minimum documentation searched (classification system followed by classification symbols)

H01F

Documentation searched other than minimum documentation to the extent that such documents are included in the fields searched

Electronic data base consulted during the international search (name of data base and, where practicable, search terms used)

CNPAT, CNKI, EPODOC, WPI: 稀土, 钕, 铜, 镓, 硼, 铁, 锆, 钛, 铌, 铪, Nd, Cu, Ga, B, Fe, Zr, Ti, Nb, Hf, 主合金, 辅合金, 时效, 高温, 低温, main, alloy, metal, assistant, high temperature, low temperature

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 113066625 A (FUJIAN CHANGTING GOLDEN DRAGON RARE-EARTH CO., LTD. et al.) 02 July 2021 (2021-07-02)<br>claims 1-10 | 1-10 |
| X | CN 111223627 A (FUJIAN CHANGJIANG GOLDEN DRAGON RARE EARTH CO., LTD. et al.) 02 June 2020 (2020-06-02)<br>claims 1-10 | 1-5, 10 |
| Y | CN 111223627 A (FUJIAN CHANGJIANG GOLDEN DRAGON RARE EARTH CO., LTD. et al.) 02 June 2020 (2020-06-02)<br>claims 1-10 | 6-9 |
| Y | CN 111636035 A (FUJIAN CHANGTING GOLDEN DRAGON RARE-EARTH CO., LTD. et al.) 08 September 2020 (2020-09-08)<br>description, paragraphs 0034 and 0066-0069 | 6-9 |
| Y | CN 107871581 A (SHIN-ETSU CHEMICAL CO., LTD.) 03 April 2018 (2018-04-03)<br>description, paragraph [0079] | 8 |
| X | CN 111613407 A (FUJIAN CHANGTING GOLDEN DRAGON RARE-EARTH CO., LTD. et al.) 01 September 2020 (2020-09-01)<br>claims 1-10 | 1-5, 10 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 April 2022** | **20 April 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/072254**

**C.** **DOCUMENTS CONSIDERED TO BE RELEVANT**

| Category* | Citation of document, with indication, where appropriate, of the relevant passages | Relevant to claim No. |
|---|---|---|
| Y | CN 111613407 A (FUJIAN CHANGTING GOLDEN DRAGON RARE-EARTH CO., LTD. et al.) 01 September 2020 (2020-09-01) description, paragraph [0079] | 6-9 |
| A | US 2006201585 A1 (TOMIZAWA, H. et al.) 14 September 2006 (2006-09-14) entire document | 1-10 |

Form PCT/ISA/210 (second sheet) (January 2015)

**INTERNATIONAL SEARCH REPORT**
Information on patent family members

International application No.

**PCT/CN2022/072254**

| Patent document cited in search report | | | Publication date (day/month/year) | Patent family member(s) | | | Publication date (day/month/year) |
|---|---|---|---|---|---|---|---|
| CN | 113066625 | A | 02 July 2021 | None | | | |
| CN | 111223627 | A | 02 June 2020 | WO | 2021169891 | A1 | 02 September 2021 |
| CN | 111636035 | A | 08 September 2020 | WO | 2021249159 | A1 | 16 December 2021 |
| CN | 107871581 | A | 03 April 2018 | JP | 2018053277 | A | 05 April 2018 |
| | | | | US | 2018090249 | A1 | 29 March 2018 |
| | | | | EP | 3309803 | A1 | 18 April 2018 |
| CN | 111613407 | A | 01 September 2020 | WO | 2021244317 | A1 | 09 December 2021 |
| US | 2006201585 | A1 | 14 September 2006 | EP | 1662516 | A1 | 31 May 2006 |
| | | | | WO | 2005015580 | A1 | 17 February 2005 |
| | | | | JP | WO2005015580 | A1 | 05 October 2006 |
| | | | | CN | 1723511 | A | 18 January 2006 |

Form PCT/ISA/210 (patent family annex) (January 2015)

33

**REFERENCES CITED IN THE DESCRIPTION**

**Patent documents cited in the description**

- CN 111724955 A